# EUROPÄISCHE PATENTSCHRIFT

(11) **EP 2 860 566 B1**
(45) Veröffentlichungstag und Bekanntmachung des Hinweises auf die Patenterteilung: **26.01.2022**
(21) Anmeldenummer: 14185414.1
(22) Anmeldetag: 18.09.2014
(51) Int. Cl.: G02B 21/00, G02B 27/58, G02B 6/06

(54) **Hochauflösende Scanning-Mikroskopie**
High resolution scanning microscopy
Microscopie à balayage haute résolution

(30) Priorität: 19.09.2013 DE 102013015933
(43) Veröffentlichungstag der Anmeldung: 15.04.2015
(73) Patentinhaber: Carl Zeiss Microscopy GmbH, 07745 Jena (DE)
(72) Erfinder: Kleppe, Ingo, 07749 Jena (DE); Netz, Ralf, 07745 Jena (DE); Kalkbrenner, Thomas, 07745 Jena (DE); Wolleschensky, Ralf, 07743 Jena (DE); Novikau, Yauheni, 99510 Apolda (DE)
(74) Vertreter: Breit, Ulrich

(56) Entgegenhaltungen:
- EP-A1- 1 698 927
- EP-A1- 2 249 194
- EP-A1- 2 317 362
- WO-A1-2013/135487
- WO-A2-2006/127967
- WO-A2-2012/039636
- CN-A- 101 210 969
- DE-A1-102008 049 886
- JP-A- 2009 251 535
- US-A1- 2002 141 052
- US-A1- 2010 093 015

## Beschreibung

Die Erfindung bezieht sich auf ein Mikroskop zur hochauflösenden Scanning-Mikroskopie einer Probe, mit einer Beleuchtungseinrichtung zum Beleuchten der Probe, einer Abbildungseinrichtung zum Scannen eines Punkt- oder Linien-Spots über die Probe und zum Abbilden des Punkt- oder Linien-Spots in ein beugungsbegrenztes, ruhendes Einzelbild unter einem Abbildungsmaßstab in eine Detektionsebene, einer Detektoreinrichtung zum Erfassen des Einzelbildes in der Detektionsebene für verschiedene Scanpositionen mit einer Ortauflösung, welche unter Berücksichtigung des Abbildungsmaßstabes mindestens doppelt so groß ist wie eine Halbwertsbreite des beugungsbegrenzten Einzelbildes, einer Auswerteeinrichtung zum Auswerten einer Beugungsstruktur des Einzelbildes für die Scanpositionen aus Daten der Detektoreinrichtung und zum Erzeugen eines Bildes der Probe, das eine Auflösung aufweist, die über die Beugungsgrenze gesteigert ist. Die Erfindung bezieht sich weiter auf ein Verfahren zur hochauflösenden Scanning-Mikroskopie einer Probe, bei dem die Probe beleuchtet wird, ein scannend über die Probe geführter Punkt- oder Linien-Spot in ein Einzelbild abgebildet wird, wobei der Spot unter einem Abbildungsmaßstab beugungsbegrenzt in das Einzelbild abgebildet wird und das Einzelbild ruhend in einer Detektionsebene liegt, für verschiedene Scanpositionen das Einzelbild mit einer Ortauflösung erfasst wird, welche unter Berücksichtigung des Abbildungsmaßstabes mindestens doppelt so groß ist wie eine Halbwertsbreite des beugungsbegrenzten Einzelbildes, so dass eine Beugungsstruktur des Einzelbildes erfasst wird, für jede Scanposition die Beugungsstruktur des Einzelbildes ausgewertet wird und ein Bild der Probe erzeugt wird, das eine Auflösung aufweist, die über die Beugungsgrenze gesteigert ist.

Ein solches Mikroskop bzw. Mikroskopieverfahren ist beispielsweise aus der Veröffentlichung C. Müller und J. Enderlein, Physical Review Letters, 104, 198101 (2010), oder der EP 2317362 A1 bekannt, die auch weitere Nachweise zum Stand der Technik aufführt.

Dieser Ansatz erreicht eine Auflösungserhöhung, indem ein Spot beugungsbegrenzt auf eine Detektionsebene abgebildet wird. Die beugungsbegrenzte Abbildung bildet einen Punkt-Spot als Airy-Scheibe ab. Diese Beugungsscheibe wird in der Detektionsebene so erfasst, dass ihre Struktur aufgelöst werden kann. Bezogen auf die Abbildungsleistung des Mikroskops erfolgt somit detektorseitig eine Überabtastung. Bei der Abbildung eines Punkt-Spots wird die Form der Airy-Scheibe aufgelöst. Durch geeignete Auswertung der Beugungsstruktur, die in den genannten Schriften geschildert ist und deren Offenbarung diesbezüglich vollumfänglich hier einbezogen sei, erreicht man eine Auflösungssteigerung um den Faktor 2 über die Beugungsgrenze.

Detektionsseitig ist es dabei jedoch unvermeidlich, dass für jeden Punkt, der auf der Probe in dieser Weise abgetastet wird, verglichen mit einem herkömmlichen Laser-Scanning-Mikroskop (nachfolgend auch als LSM abgekürzt) ein Einzelbild mit einem Vielfachen an Bildinformation aufgenommen werden muss. Erfasst man die Struktur des Einzelbildes des Spots beispielsweise mit 16 Pixeln, hat man pro Spot nicht nur die 16-fache Datenmenge, ein einzelnes Pixel enthält auch im Mittel nur ein 1/16 der Strahlungsintensität, die bei einer üblichen Pinhole-Detektion auf den Detektor eines LSM fallen würde. Da die Strahlungsintensität über die Struktur des Einzelbildes, beispielsweise die Airy-Scheibe, natürlich nicht gleichmäßig verteilt ist, fällt am Rande dieser Struktur tatsächlich sogar noch bedeutend weniger Strahlungsintensität an, als der Mittelwert von 1/n bei n-Pixeln.

Man steht also vor der Aufgabe, detektorseitig Strahlungsmengen hochauflösend erfassen zu können.

Es sind im Stand der Technik andere Verfahren bekannt, welche die geschilderten detektionsseitigen Probleme bei der Hochauflösung vermeiden. So ist beispielsweise in der EP 1157297 B1 ein Verfahren angesprochen, bei dem mittels strukturierter Beleuchtung nicht linearer Prozesse ausgenützt werden. Eine strukturierte Beleuchtung wird in mehreren Dreh- und Ortslagen über die Probe verschoben und die Probe in diesen unterschiedlichen Zuständen auf einen Weitfelddetektor abgebildet, für den die geschilderten Beschränkungen nicht bestehen.

Ein Verfahren, das ohne die geschilderten Detektoreinschränkungen ebenfalls eine Hochauflösung (also eine Auflösung eines Probenbildes jenseits der Beugungsgrenze) erreicht, ist aus der WO 2006/127692 A2 und der DE 102006021317 B3 bekannt. Dieses mit PALM abgekürzte Verfahren verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden; nicht aktivierte Moleküle senden auch nach Einstrahlung von Anregungsstrahlung keine Fluoreszenzstrahlung aus. Die Aktivierungsstrahlung schaltet die Aktivierungssubstanz also in einen Zustand, in dem sie zur Fluoreszenz anregbar ist. Man spricht deshalb allgemein von einem Umschaltsignal. Dieses wird nun so aufgebracht, dass zumindest ein gewisser Anteil der aktivierten Markierungsmoleküle von benachbarten, ebenfalls aktivierten Markierungsmolekülen so beabstandet ist, dass die aktivierten Markierungsmoleküle gemessen an der optischen Auflösung der Mikroskopie getrennt oder nachträglich trennbar sind. Man spricht von Isolierung der aktivierten Moleküle. Für diese isolierten Moleküle ist es einfach, das Zentrum deren auflösungsbegrenzt bedingter Strahlungsverteilung zu ermitteln und somit rechnerisch die Lage der Moleküle mit höherer Genauigkeit zu bestimmen, als es die optische Abbildung eigentlich zulässt. Zum Abbilden der gesamten Probe benutzt das PALM-Verfahren die Tatsache, dass die Wahrscheinlichkeit, mit der ein Markierungsmolekül durch das Umschaltsignal bei gegebener Intensität des Umschaltsignals aktiviert wird, für alle Markierungsmoleküle gleich ist. Die Intensität des Umschaltsignals wird also so aufgebracht, dass die gewünschte Isolierung erfolgt. Diese Verfahrensschritte werden so lange wiederholt, bis möglichst alle Markierungsmoleküle einmal in einer Teilmenge, die zur Fluoreszenz angeregt wurde, enthalten waren.

Die WO 2012/039636 A1 und die DE 102008049886 A1 bilden das PALM-Verfahren hinsichtlich Tiefenauflösung und Farbauflösung weiter und setzen dazu eine Phasenmaske ein.

Die CN 101210969 A offenbart ein Lichtleitfaserbündel, das auf mehrere Detektorelemente aufgefächert ist und in einem 3D-Bilddetektor eingesetzt wird. Ähnliches ist auch aus US 2010/0093015 A1 und WO 2006/127967 A2 sowie der erst am 19. September 2013 publizierten WO 2013/135487 A1 bekannt.

Die EP 2249194 A1 offenbart die Verwendung eines DMD, um sequenziell unterschiedliche Bereiche eines Bildes auf ein PMT-Array abzubilden.

Die EP 1698927 A1 verwendet eine Phasenmaske, um in einem punktscannenden LSM eine bestimmte Strahlungsverteilung in einer Pupillenebene des Beleuchtungsstrahlenganges zu erzeugen, in der ein achromatischer Hauptfarbteiler sitzt.

Die US 2002/0140152 A2 verwendet eine Phasenplatte zur Formung des Abgrenzungslichtes in der STED-Mikroskopie.

JP 2009 251535 A beschreibt ein konfokales Mikroskop mit einer Multi-Spotbeleuchtung und -detektion.

In einem Laser-Scanning-Mikroskop (LSM) wird eine die erhöhte Auflösung dadurch erreicht, in dem das sogenannte Pinhole vor dem Detektor auf eine Größe deutlich kleiner als die Beugungsgrenze (≤ Airy / 4) reduziert wird. Man spricht dann von einem konfokalen Laser-Scanning-Mikroskop. Das "Airy" wird über die ersten Nullstellen eines beugungsbegrenzten Beleuchtungsspots definiert und ist ein etablierter Begriff in der Optikliteratur.

Für den Fall eines gattungsgemäßen Fluoreszenz-LSMs besteht ein entscheidender Nachteil bei der gegenwärtigen Methode zur Erlangung erhöhter Auflösung: Das sehr schlechte Signal-zu-Rausch-Verhältnis aufgrund der geringen Anzahl detektierter Photonen, die von der Probe kommen, was in der Praxis dazu führt, das keine verbesserte Auflösung erreicht werden kann.

Einen weiteren Nachteil des gattungsgemäßen Fluoreszenz-LSMs stellt auch die im Vergleich zu einem Weitfeld-Mikroskopie-Verfahren geringe Bildaufnahmegeschwindigkeit dar.

Es ist nun aber auch möglich, die Auflösung eines Laser-Scanning-Mikroskops bei gleichzeitig besserem Signal-zu-Rausch-Verhältnis zu erhöhen. Dazu muss mit einem größeren PinholeDurchmesser (ca. 1 Airy), was eine höhere Anzahl detektierbarer Photonen bedeutet, und mit einer Sub-Airy-ortsaufgelösten Detektion gearbeitet werden. Nach der Bildaufnahme erfolgt eine Umsortierung und Verrechnung der Daten mittels eines speziellen Algorithmus. Dies führt dann zu einer erhöhten Auflösung im Probenbild. Diese Methode von *Colin Sheppard,* wird in der Literatur auch *Akkumulation verschobener Sub-Airy-Detektorwerte* genannt (vgl. Lit. [3-7]).

Die genannte Methode funktioniert nicht nur an fluoreszierenden Proben, sie kann auch für die Bildgebung an kohärent wechselwirkenden Materialproben angewendet werden. Hier bietet die Methode kaum Vorteile hinsichtlich des Detektionsphotonenbudgets. Vielmehr besteht der Vorteil darin, dass die Gesamt Übertragungsfunktion im Wesentlichen durch die Pupillenfunktion mit doppelter Bandbreite gegeben ist. D.h. die höheren Objektfrequenzen erfahren die gleiche Gewichtung wie die tieferen Objektfrequenzen.

Voraussetzung für die Anwendbarkeit der Methode auf kohärent wechselwirkende Materialproben ist aber, dass sowohl Amplitude als auch Phase mit einer Sub-Airy-Ortsauflösung und mit hoher Sampling-Rate vermessen werden.

Im Folgenden wird insbesondere die Fluoreszenzmikroskopie betrachtet.

Als Aufgabe der Erfindung kann angesehen werden, die Bildaufnahmegeschwindigkeit und die Anpassungsmöglichkeit der Beleuchtungslichtverteilung an die Applikation bei einem LSM zu verbessern und somit als Vorteile gegenüber einem konventionellen LSM zu etablieren.

Die Erfindung wird durch die Merkmale der unabhängigen Patentansprüche charakterisiert.

Bevorzugte Weiterbildungen sind Gegenstand der abhängigen Ansprüche.

Analog zu einem LSM mit Sub-Airy ortsauflösender Detektionseinrichtung kommt es prinzipbedingt zu einer relativen Verschiebung zwischen der Beleuchtungspunktbildfunktion (Beleuchtungs-(Intensitäts-)PSF) und der Detektions-punktbildfunktion (Detektions-(Intensitäts-)PSF) für Off-Axis-Detektorelemente.

Off-Axis-Detektorelemente (äußere Fasern des Bündels) haben eine Punktbildfunktion in der Probenebene, die etwas verschoben ist zur Beleuchtungs-Punktbildfunktion.

Als besonders vorteilhaft hat sich eine technisch bevorzugte Ausführungsform einer Sub-Airy ortsauflösender Detektionseinrichtung bestehend aus einen Faserbündel-Array, welches alles Detektionslicht auf ein PMT-Array umverteilt, erwiesen.

Im konventionellen Fall werden punktsymmetrische Punktbildfunktionen für die Beleuchtung und Detektion verwendet. Damit werden technologische Aufwände einschließlich weiterer notwendiger optischer Komponenten, die beispielsweise eine Drehung der Probe oder Drehung der Scan-Richtung ermöglichen, vermieden. Auch die Verrechnung gestaltet sich einfacher, da die Punktbildfunktionen mathematisch einfacher beschrieben werden können.

Als Erweiterung zum Stand der Technik und damit als wesentlicher Unterschied wird bei der hier beschriebenen erfindungsgemäßen Lösung die Beleuchtungs-PSF in ihrer Form aktiv und geeignet strukturiert. Dies ermöglicht eine Fülle von Anwendungen und darüber hinaus die optimale Anpassung der Punktbildfunktion auf eine bestimmte Applikation und auf bestimmte Probeneigenschaften.

Die erfindungsgemäßen Ausführungsformen unterliegen Randbedingungen, die die Wahl eines Kompromisses zwischen den für eine Applikation optimalen technischen Parametern erfordern. Beispielsweise kann es sich aufgrund der limitierten Anzahl an Detektorelementen als notwendig erweisen, einen Kompromiss zwischen optischer Auflösung und Abtastgeschwindigkeit der Probe mittels des Beleuchtungslichtes zu finden.

Der Kern des erfindungsgemäßen Verfahrens besteht somit in einer vorteilhaften Ausgestaltung der Beleuchtungs-Punktbildfunktion.

### a) Lateral geschwindigkeitsoptimierte Beleuchtungs-PSF:

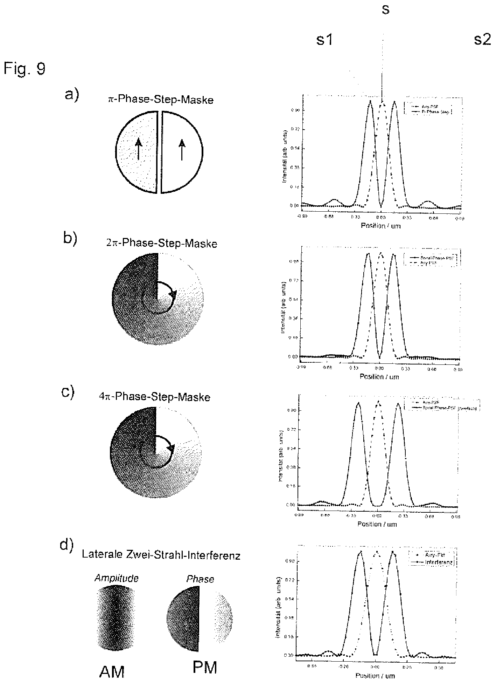

Die Beleuchtungs-PSF-Form wird über eine räumliche Phasenmodulation in einer Pupille bzw.pupillennah oder in einer zur Objektivpupille optisch konjugierten Ebene so geändert (Fig. 9 - Fig. 15), dass der Frequenzinhalt der PSF es immer noch ermöglicht, nach der Verrechnung mindestens die typische konfokale Auflösung bei einem Pinholedurchmesser in der Detektionsebene von ca. einem Airy zu erreichen. Gleichzeitig sollte die PSF eine möglichst große Fläche überdecken. Auf diese Weise ist man in der Lage, erfindungsgemäß eine deutlich höhere Bildaufnahmegeschwindigkeit durch parallelisierte Detektion von Probenlicht aus einem vergleichsweise größeren Probengebiet zu erreichen. Man nutzt somit effizient die Vorzüge der ultraschnellen sensitiven Detektionseinrichtung, die quasi eine ultraschnelle Mini-Kamera darstellt.

Erfindungsgemäß wird der Geschwindigkeitsvorteil beim Scanning über das Einstellen der "gröberen" Pixel realisiert (Scan-Steps) erzielt. Dies bedeutet, dass sich die absolute Steigerung der Aufnahmegeschwindigkeit nur aus der Parallelisierung der langsamen Scanachse ergibt. Die Parallelisierung in der schnellen Scanachse erlaubt aber eine relative Steigerung der Aufnahmegeschwindigkeit, da durch die Parallelisierung die Belichtungszeit reduziert werden kann. Dies gilt aber nur für den Fall, dass die Maximalgeschwindigkeit noch nicht erreicht ist. Ist die Maximalgeschwindigkeit erreicht, kann entweder das SNR bei gleicher Pixelanzahl gesteigert werden oder umgekehrt bei gleichem SNR die Anzahl an Pixel in der schnellen Achse reduziert werden.

Eine einfache erfindungsgemäß bevorzugte Ausführungsform einer Phasenplatte ist durch eine π-Step-Phasenmaske (Fig. 9a) gegeben. Diese Phasenmaske, die einen rr-Phasensprung in der Mitte der Platte aufweist, erzeugt zwei dicht nebeneinander liegende nahezu fourierbegrenzte Beleuchtungsspots. Das bedeutet dass mit solch einer Maske die Abtastgeschwindigkeit verdoppelt werden kann. Bei der Anwendung eines Hoch-NA-Objektivs sollte der Polarisationsvektor parallel zur Phasensprungkante ausgerichtet sein. Andernfalls wird das in der Mitte liegende Minimum nicht die Null erreichen.

Eine weitere erfindungsgemäß bevorzugte Ausführungsform einer Phasenplatte ist durch eine n·2π-Spiral-Phasenmaske gegeben (Fig. 9b und 9c). Solch eine Phasenmaske erzeugt eine Beleuchtungslichtverteilung in Form einer Donut-Mode in der Probenebene. Der Donut-Beleuchtungs-Ring weist ebenso steile Flanken auf wie die gewöhnliche Beleuchtungs-PSF eines konventionellen LSMs, überdeckt aber mit seiner Ausdehnung eine 4 mal so große Fläche wie ein Fourier begrenzter Beleuchtungsspot. Durch Variation des Außen- und Innendurchmessers der Donut-Mode wird der Grad der Parallelisierung und damit den Geschwindigkeitsgewinn einstellbar. Das vom Donut-Beleuchtungs-Ring erzeugte Detektionslicht wird auf die Detektionseinrichtung abgebildet.

Hoch-NA-Objektive in Kombination mit einer Spiral-Phasen-Maske erfordern zirkular polarisiertes Licht zur Erzeugung einer Donut-Mode.

Es ist auch denkbar, geeignete Phasenplatten zur Erzeugung von mehr als zwei Spots (≥ 3) in den Beleuchtungsstrahlengang zu integrieren.

### b) Axial geschwindigkeitsoptimierte PSF

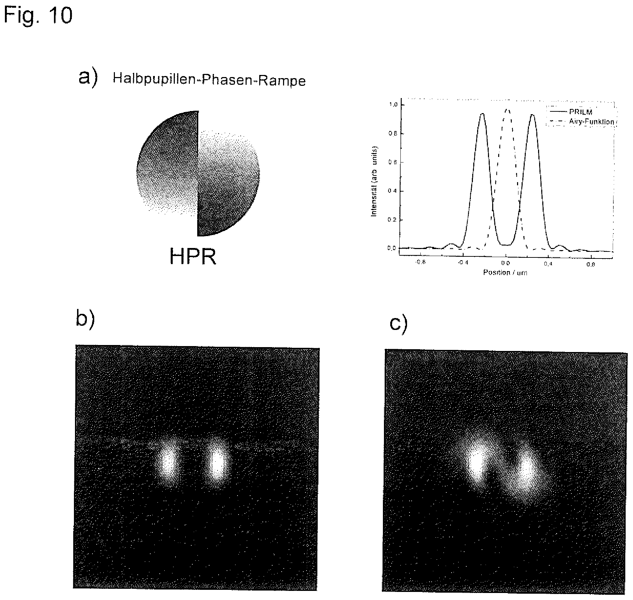

Optional kann auch die Detektions-PSF-Form über eine Phasenmaske so gestaltet werden, dass der Frequenzinhalt der Detektions-PSF es immer noch ermöglicht, nach der Verrechnung mindestens die typische konfokale Auflösung erreichen zu können und gleichzeitig die z-Information über verschiedene Ebenen lateral so kodiert und maximiert wird, dass für gegebene laterale Auflösung möglichst viele Z-Ebenen zu einem Bild beitragen (Fig. 10). Dies wird beispielsweise durch die Verwendung von Zylinderlinsen erreicht, denn die Detektions-PSF wird in Abhängigkeit von der z-Position lateral elliptisch.

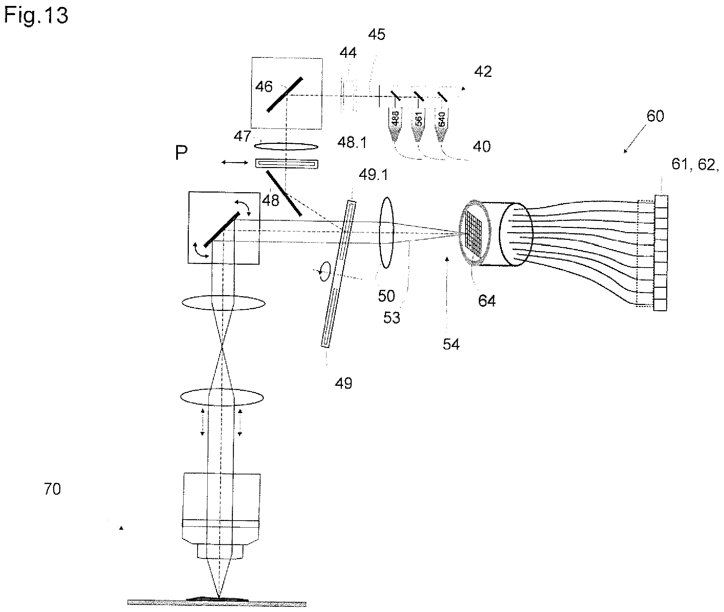

Auch durch Verkippen der PSF oder durch die Verwendung Helix-artiger PSF-Formen (vgl. Lit. [8]), die durch geeignete Phasenmasken im Detektionsstrahlengang erzeugt werden können (Fig. 13), kann das Verfahren implementiert werden.

Wird zusätzlich die Beleuchtungs-PSF-Form moduliert, um möglichst steile Kanten der Gesamt-Punktbildfunktion in z-Richtung erzeugen zu können, so resultiert daraus eine leichtere Zuordnung des gemessenen Signals zu den verschiedenen z-Ebenen.

### c) Verbesserte z-Auflösung / z-Auflösung mit besserem Kontrast

Optional wird weiter die Detektions-PSF-Form über eine Phasenmaske so geändert, dass der Frequenzinhalt der PSF es immer noch ermöglicht, nach der Verrechnung mindestens die typische konfokale Auflösung zu erhalten, jedoch die z-Information über verschiedene Ebenen lateral so kodiert und maximiert wird, dass für gegebene laterale Auflösung möglichst wenige Z-Ebenen zu einem Bild beitragen und die Ableitung der z-PSF in z-Richtung möglichst betragsmäßig groß ist. Ein Lösungsbeispiel hierfür ist die Helix-Form (vgl. Lit. [8]).

Der genannte Effekt kann verstärkt werden, indem eine Beleuchtungslichtverteilung erzeugt wird, die möglichst disjunkt zu der Detektionslichtverteilung ist. D.h. hierbei würden zwei unterschiedliche Masken zur Anwendung kommen, eine im Beleuchtungsstrahlengang und eine andere im Detektionsstrahlengang.

### d) Zwei-Beleuchtungsfarben-Bildgebung auf einer ortsauflösenden Detektionseinrichtung (mit nahezu konfokaler Auflösung)

Die Phasenmaske wird optional derart gestaltet, dass sich in Abhängigkeit von der Beleuchtungswellenlänge die Phasenfunktion in einer Weise unterscheitet, dass sich im Fokus der Beleuchtungsoptik die gleichzeitig mit unterschiedlicher Wellenlänge applizierten Beleuchtungslichtverteilungen sowohl in der Probenebene als auch schlussendlich auf dem ortsauflösenden Detektor (Faserbündel) möglichst wenig räumlich überlappen. Es wäre dabei von Vorteil, wenn eine optimierbare Adaptionseinrichtung für das die Phasenfunktion erzeugende optische Element für gemäß Farbstoffpärchen geeignet einstellbare Beleuchtungswellenlängenkombinationen ausgebildet ist.

Die Bandbreite der Beleuchtungs- und Detektions-Punktbildfunktion unter Verwendung einer Phasenmaske soll sich dabei nicht wesentlich von der der beugungsbegrenzten Beleuchtungs- und Detektions-Punktbildfunktion unterscheiden, so dass die typische konfokale Auflösung erreicht werden kann.

Die sich an eine Aufnahme der Bilddaten anschließende Verrechnung zur räumlichen und spektralen Trennung der Bilddaten kann unter Verwendung von Farb-Entmischungsalgorithmen erfolgen.

### e) Multi-Color-Imaging auf eine ortsauflösende Detektionseinrichtung (Faserbündel / Array-Detektor)

Es ist auch denkbar, in den Detektionsstrahlengang ein chromatisch wirksames optisches Phasenelement in den Detektionsstrahlengang einzufügen, welches eine spezifische Zuordnung zwischen Faser im Faserbündel und Wellenlänge im Fluoreszenz-Farbspektrum ermöglicht (Konzept eines Spektraldetektors). Dabei soll sich wiederum die Bandbreite der Detektions-Punktbildfunktion unter Verwendung einer Phasenmaske nicht wesentlich von der der beugungsbegrenzten Detektions-Punktbildfunktion unterscheiden, so dass die typische konfokale Auflösung erreicht werden kann.

Neben der Erzeugung der Beleuchtungs- und ggf. Detektionslichtverteilung ist ein erfindungswesentlicher Aspekt die Flexibilität in der Gestaltung der Lichtverteilungen angepasst an die Applikation. Neben der Form der Lichtverteilung ändert sich in den Applikationen vor allem die Wellenlänge der Beleuchtung und Detektion.

Ein hohes Maß an Flexibilität hinsichtlich der beiden genannten Merkmale (Form und Wellenlänge) bieten räumliche Lichtmodulatoren. Hierbei seien pixelierte Liquid-Crystal und Mikrospiegel-basierte Modulatoren genannt.

Eine einfache Forderung hinsichtlich Flexibilität besteht in der Notwendigkeit, vom parallelisierten Betriebs-Modus mit Phasenmaske auf den normalen Konfokal-Modus umschalten zu können. Einfache mechanische Lösungen - wie Schieber oder Revolver, stellen hierbei eine Ausführungsform dar.

Die Erfindung beruht wesentlich auf in oder in der Nähe einer Objektivpupillenebene angeordneten, die Wellenfront in ihrer Phase entlang ihres lateralen Querschnitts unterschiedlich beeinflussenden Elementen, wodurch in der Objektebene (Probe) eine räumliche Struktur entsteht, die variiert werden kann. Derartige Elemente werden meist als "Phasenplatten" oder Phasenmasken" bezeichnet, wobei die unterschiedliche Beeinflussung der Phase durch Beschichtung und/oder Ätzung von Quarzglas mit eingeätzten Vertiefungen wie beim Transmissionsgitter oder durch einen Phasenversatz durch unterschiedliche Dicken eines Transmissionselementes erzeugt werden kann (z.B. Glasplatte mit Stufen). Derartige Phasenmasken können mit einer Amplitudenmaske kombiniert werden.

Im Rahmen der Erfindung wird der auf der Probe abgetastete Spot ruhend in eine Detektionsebene abgebildet. Die Strahlung aus der Detektionsebene kann dann nicht-abbildend umverteilt und auf das Detektorarray geleitet werden. Der Begriff "nicht-abbildend" ist dabei auf das in der Detektionsebene vorhandene Einzelbild bezogen. Einzelne Flächenbereiche dieses Einzelbildes können natürlich dennoch gemäß den Abbildungsgesetzen abgebildet werden. Insofern kann zwischen Detektorarray und Umverteilungselement durchaus abbildende Optik liegen. Das in der Detektionsebene vorliegende Einzelbild bleibt jedoch bei der Umverteilung als solches nicht erhalten.

Der Begriff "beugungsbegrenzt" soll nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird.

Auch dann hat das Einzelbild eine Struktur, die hier als Beugungsstruktur bezeichnet wird. Sie wird überabgetastet.

Dieses Prinzip ermöglicht es, ein Detektorarray zu verwenden, das in seiner Größe nicht zum Einzelbild passt. Das Detektorarray ist vorteilhaft in mindestens einer Ausdehnung größer oder kleiner als das zu erfassende Einzelbild. Unter den Begriff der unterschiedlichen geometrischen Ausbildung fallen sowohl eine unterschiedliche Ausdehnung des Detektorarrays als auch eine Anordnung mit unterschiedlichem Aspektverhältnis bezogen auf Höhe und Breite der Ausdehnung des Einzelbildes in der Detektionsebene. Die Pixel des Detektorarrays können zusätzlich für die erforderliche Auflösung zu groß sein. Auch ist es nun zulässig, dass der Umriss der Pixelanordnung des Detektorarrays grundlegend anders ist, als der Umriss, den das Einzelbild in der Detektionsebene hat. Letztlich hat das Detektorarray eine andere Größe als das Einzelbild in der Detektionsebene. Die Umverteilung im Verfahren bzw. das Umverteilungselement im Mikroskop ermöglichen es, ein Detektorarray zu wählen, ohne die Abmessungseinschränkungen und Pixelgrößeneinschränkungen beachten zu müssen, welche durch das Einzelbild und dessen Größe entstehen. Insbesondere kann als Detektorarray eine Detektorzeile verwendet werden.

Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Dieses Konzept kann auch in parallelisierter Form für mehrere Spots gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Sie werden dann entweder von einem gemeinsamen Umverteilungselement, das flächenmäßig entsprechend groß ist bzw. von mehreren einzelnen Umverteilungselementen umverteilt und dann auf ein entsprechend größeres einzelnes oder mehrere einzelne Detektorarrays geleitet.

Die nachfolgende Beschreibung konzentriert sich exemplarisch auf die Abtastung mit einem einzelnen Punkt-Spot. Dies soll jedoch nicht als Einschränkung verstanden werden, und die erläuterten Merkmale und Grundsätze gelten sinngemäß auch für die parallele Abtastung mehrerer Punkt-Spots wie auch für die Verwendung eines Linienspots. Letzterer ist natürlich nur quer zur Linienerstreckung beugungsbegrenzt, so dass die diesbezüglichen Merkmale dieser Beschreibung dann nur in einer Richtung (quer zur Linienerstreckung) gelten.

Durch das erfindungsgemäße Vorgehen kann das ISM-Verfahren bei zufriedenstellender Geschwindigkeit und mit vertretbarem apparativen Aufwand ausgeführt werden. Die Erfindung eröffnet für ein hochauflösendes Mikroskopieprinzip ein breites Anwendungsfeld, das so bislang nicht gegeben war.

Eine Möglichkeit der Umverteilung bzw. das Umverteilungselement zu realisieren besteht darin, ein Bündel aus Lichtleitfasern zu verwenden. Diese können vorzugsweise als Multimode-Lichtleitfasern ausgeführt werden. Das Bündel hat einen Eingang, der in der Detektionsebene angeordnet ist und in seinem Umriss den Ausdehnungen des beugungsbegrenzten Einzelbildes in der Detektionsebene genügt. Am Ausgang sind die Lichtleitfasern hingegen in der geometrischen Anordnung angeordnet, welche durch das Detektorarray vorgegeben ist, und welche sich von der des Eingangs unterscheidet. Die ausgangsseitigen Enden der Lichtleitfasern können dabei direkt auf die Pixel des Detektorarrays geführt werden. Besonders vorteilhaft ist es, wenn der Ausgang des Bündels in einem Stecker zusammengefasst ist, der bequem auf eine Detektorzeile, beispielsweise eine APD- oder PMT-Zeile aufgesteckt werden kann.

Für das Verständnis ist es wichtig, zwischen den Pixeln des Detektorarrays und Bildpixeln zu unterscheiden, mit denen das Einzelbild in der Detektionsebene aufgelöst wird. Jedes Bildpixel ist i. d. R. genau einem Pixel des Detektorarrays zugeordnet; hinsichtlich ihrer Anordnung sind die beiden aber unterschiedlich. Kennzeichnend für die Erfindung ist es unter anderem, dass in der Detektionsebene die Strahlung an Bildpixeln aufgenommen wird, welche hinsichtlich ihrer Größe und Anordnung eine Überabtastung des Einzelbildes bewirken. Auf diese Weise wird die Struktur des Einzelbildes aufgelöst, die aufgrund der beugungsbegrenzten Erzeugung des Einzelbildes eine Beugungsstruktur ist. Das Umverteilungselement hat eine Eingangsseite, an der diese Bildpixel vorgesehen sind. Die Eingangsseite liegt in der Detektionsebene. Das Umverteilungselement leitet die Strahlung an jedem Bildpixel zu einem der Pixel des Detektorarrays. Die Zuordnung von Bildpixeln zu Pixeln des Detektorarrays hält die Bildstruktur nicht aufrecht, weshalb die Umverteilung bezogen auf das Einzelbild nicht-abbildend ist. Dies könnte auch dadurch charakterisiert werden, dass in einem gattungsgemäßen Mikroskop die Detektoreinrichtung ein nicht-abbildendes Umverteilungselement aufweist, das eine in der Detektionsebene liegende Eingangsseite aufweist, an der die Strahlung mit Bildpixeln aufgenommen wird. Das Umverteilungselement weist weiter eine Ausgangsseite auf, an der die an den Bildpixeln aufgenommene Strahlung Pixeln eines Detektorarrays zugeführt wird, wobei die Strahlung von der Eingangsseite zur Ausgangsseite bezogen auf das Einzelbild nicht-abbildend umverteilt ist. Analog könnte das entsprechende Verfahren dadurch charakterisiert werden, dass bei einem gattungsgemäßen Verfahren die Strahlung in der Detektionsebene mit Bildpixeln aufgenommen wird, die bezogen auf das Einzelbild nicht-abbildend auf Pixel des Detektorarrays umverteilt werden. Das Detektorarrays unterscheidet sich hinsichtlich Anordnung und/Größe seiner Pixel von der Anordnung und/oder Größe der Bildpixel in der Detektionsebene. Weiter sind die Bildpixel in der Detektionsebene vom Umverteilungselement so bereitgestellt, dass bezogen auf die Beugungsgrenze die Beugungsstruktur des Einzelbildes überabgetastet ist.

Bei hochempfindlichen Detektorarrays ist es bekannt, dass benachbarte Pixel bei hohen Strahlungsintensitätsunterschieden eine Störung durch Übersprechen zeigt. Um solches zu vermeiden, ist eine Weiterbildung bevorzugt, bei der die Lichtleitfasern so vom Eingang zum Ausgang geführt sind, dass am Ausgang benachbarte Lichtleitfasern auch am Eingang benachbart sind. Da das beugungsbegrenzte Einzelbild keine sprungartigen Strahlungsintensitätsänderungen zeigt, stellt eine derartige Ausgestaltung des Umverteilungselementes automatisch sicher, dass nebeneinanderliegende Pixel des Detektorarrays möglichst geringe Strahlungsintensitätsunterschiede erhalten, was das Übersprechen minimiert.

Anstelle einer auf Lichtleitfasern basierten Umverteilung ist es auch möglich, das Umverteilungselement mit einem Spiegel auszurüsten, der unterschiedlich geneigte Spiegelelemente hat. Ein solcher Spiegel kann beispielsweise als Facettenspiegel, DMD oder adaptiver Spiegel ausgestaltet werden, wobei bei den letzten beiden Varianten eine entsprechende Einstellung bzw. Ansteuerung die Neigung der Spiegelelemente sicherstellt. Die Spiegelelemente leiten die Strahlung aus der Detektionsebene auf die Pixel des Detektorarrays, dessen geometrische Ausbildung sich von der der Spiegelelemente unterscheidet.

Die Spiegelelemente stellen wie die Lichtleitfaserenden im Eingang des Lichtleitfaserbündels die Bildpixel hinsichtlich der Auflösung der Beugungsstruktur des Einzelbildes dar. Ihre Größe ist für die Überlastung entscheidend, nicht (mehr) die Pixelgröße des Detektorarrays. Insofern wird hier auch eine Gruppe aus mehreren Einzeldetektoren als Detektorarray verstanden, da diese in ihrer Anordnung immer anders (also größer) als die Bildpixel in der Detektionsebene sind.

Bei LSM werden je nach erwünschter Auflösung unterschiedliche Objektive verwendet. Der Wechsel eines Objektivs verändert die Ausdehnung eines Einzelbildes in der Detektionsebene. Es ist deshalb bevorzugt, der Detektionsebene in Abbildungsrichtung eine Zoomoptik zur Anpassung der Größe des Einzelbildes an die der Detektoreinrichtung vorzuordnen. Eine solche Zoomoptik variiert die Größe des Einzelbildes in einem Prozentbereich deutlich kleiner 100 %, ist also sehr viel einfacher auszuführen, als eine Vervielfachung der Größe des Einzelbildes, die eingangs als nachteilig geschildert wurde.

Die Beleuchtung der Probe erfolgt bevorzugt wie in einem üblichen LSM ebenfalls scannend, obwohl dies nicht zwingend ist. Man erreicht dann allerdings die maximale Auflösungssteigerung. Beleuchtet man die Probe scannend, ist es zweckmäßig, dass die Beleuchtungseinrichtung und die Abbildungseinrichtung eine gemeinsame Scaneinrichtung haben, welche einen Beleuchtungsspot über die Probe führt und zugleich den mit dem Beleuchtungsspot zusammenfallenden Spot, an dem die Probe abgebildet wird, in Bezug auf den Detektor wieder descannt, so dass das Einzelbild ruhend in der Detektionsebene ist. Bei einem solchen Aufbau kann man die Zoomoptik in dem gemeinsamen Teil von Beleuchtungs- und Abbildungseinrichtung setzen. Sie erlaubt es dann nicht nur, die Anpassung des Einzelbildes an die Größe des Detektors in der Detektionsebene vorzunehmen, sondern erlaubt auch zusätzlich die verfügbare Beleuchtungsstrahlung ohne Randverluste vollständig in die Objektivpupille, welche sich mit Wahl des Objektives ändern kann, einzukoppeln.

Ein strahlungsintensitätabhängiges Übersprechen zwischen nebeneinanderliegenden Pixeln des Detektorarrays kann, wie bereits eingangs erwähnt, bei Umverteilung mittels Lichtleitfaserbündel durch geeignete Anordnung der Lichtleitfasern im Bündel reduziert werden. Zusätzlich oder alternativ ist es auch möglich, eine Kalibrierung durchzuführen. Dazu wird jede Lichtleitfaser nacheinander mit Strahlung beaufschlagt und das Störsignal in benachbarten Pixeln erfasst. Auf diese Weise wird eine Kalibriermatrix aufgestellt, mit der bei der späteren Mikroskopie der Probe ein strahlungsintensitätsabhängiges Übersprechen nebeneinanderliegender Pixel korrigiert wird.

Die Auflösung der Beugungsstruktur des Einzelbildes erlaubt es zusätzlich, eine Bewegungsrichtung des Spots zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, dass sich, bezogen nebeneinanderliegende Bildpixel in der Probe aufgrund der beugungsbegrenzten Abbildung des Spots in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Neben der erhöhten Auflösung lässt sich über die räumliche und zeitliche Korrelation der Signale aus einer Messreihe der einzelnen Detektorelemente (die Bildpixeln in der Detektionsebene zugeordnet sind) eine zeitliche Veränderung der Fluoreszenz im vom Spot erfassten Detektionsvolumen erfassen, z. B. können aus einer zeitlichen Korrelation wie bei der Fluoreszenzkorrelationsspektroskopie Diffusionskoeffizienten bestimmt werden und auch durch das Einbeziehen der räumlichen Korrelation zwischen Bildpixeln gerichtete Diffusion und Diffusionsbarrieren visualisiert werden. Bewegungsabläufe der Fluoreszenzmoleküle sind darüber hinaus auch für Trackinganwendungen von großem Interesse, da dort der Beleuchtungsspot der Bewegung der Fluoreszenzmoleküle folgen soll. Die hier beschriebene Anordnung erlaubt es hochgenau die Bewegungsrichtung schon innerhalb einer Pixelbeichtungszeit zu ermitteln. Es ist deshalb als Weiterbildung bevorzugt, dass Veränderungen in der Probe erfasst werden, indem bei in der Probe ruhendem Punkt- oder Linien-Spot eine zeitliche Veränderung des beugungsbegrenzten Einzelbildes ermittelt und ausgewertet wird.

Das erfindungsgemäße Vorgehen ermöglicht weiter bei gescannter Beleuchtung die Beleuchtungsverteilung zu modifizieren, beispielsweise mittels eines Phasenfilters. Kann damit sehr einfach das Verfahren realisiert werden, wie es beschrieben ist in Gong et al., Opt. Let., 34, 3508 (2009).

Soweit hier ein Verfahren beschrieben wird, realisiert ein Steuergerät diese Verfahrensschritte im Betrieb des Mikroskops.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines Laser-Scanning-Mikroskops zur hochauflösenden Mikroskopie,
- Fig. 2: eine vergrößerte Darstellung einer Detektoreinrichtung des Mikroskops der Fig. 1;
- Fig. 3 und 4: Draufsichten auf mögliche Ausführungsformen der Detektoreinrichtung 19 in einer Detektionsebene,
- Fig. 5: eine Weiterbildung des Mikroskops der Fig. 1 durch eine Zoom-Optik zur Anpassung der Größe des Detektorfelde,
- Fig. 6: eine Abwandlung des Mikroskops der Fig. 5 hinsichtlich der Zoom-Optik sowie hinsichtlich einer Weiterbildung zur mehrfarbigen Abbildung,
- Fig. 7: eine Abwandlung des Mikroskops der Fig. 1, wobei die Abwandlung die Detektoreinrichtung betrifft,
- Fig. 8: eine Abwandlung der Detektoreinrichtung 19 der Fig. 7,
- Fig. 9: Beispiele für Phasen-/Amplitudenfunktionen in der Pupille und dazugehörige Querschnitte durch die 2D-Intensitätsverteilung der Beleuchtung,
- Fig. 10: a) Beispiel für eine Halbpupillen-Phasen-Rampe in der Pupille mit entgegen gesetzter Ausrichtung der Rampe und dazugehörigem Querschnitt durch die 2D-Intensitätsverteilung der Beleuchtung. b) 2D-Intensitätsverteilung im Fokus. c) 2D-Intensitätsverteilung 200 nm außerhalb vom Fokus,
- Fig. 11: Phasenmasken mit unterschiedlicher Wirksamkeit auf Beleuchtung und Detektion. a) Nichtkompensierte Phasenfunktion im einfachen und/oder doppelten Durchgang. b) und c) kompensierte Phasenfunktion für in beide Richtungen durch die Phasenmaske hindurch propagierendes Licht,
- Fig. 12: eine Draufsicht auf eine Phasenmaske nach Fig. 12 a),
- Fig. 13: Laser-Scanning-Mikroskop mit ultraschneller sensitiver und ortsauflösender Detektionseinrichtung 60 und mit einer Amplituden-/Phasenmaske 48.1 im Beleuchtungsstrahlengang in einer Objektivpupille,
- Fig. 14: Laser-Scanning-Mikroskop mit ultraschneller sensitiver und ortsauflösender Detektionseinrichtung 60 und mit einer Amplituden-/Phasenmaske 56.1 im Detektionsstrahlengang in einer Objektivpupille,
- Fig. 15: Laser-Scanning-Mikroskop mit ultraschneller sensitiver und ortsauflösender Detektionseinrichtung 60 und mit einer und/oder mehreren Amplituden-/Phasenmasken 49.1 in einem Filter-/Strahlteilerrad 49,
- Fig. 16: Laser-Scanning-Mikroskop mit ultraschneller sensitiver und ortsauflösender Detektionseinrichtung 60 und mit einer und/oder mehreren Amplituden-/Phasenmasken 49.1 in einem Filter-/Strahlteilerrad 49 und einer einstellbaren Detektionsoptik 50,
- Fig. 17: Laser-Scanning-Mikroskop mit ultraschneller sensitiver und ortsauflösender Detektionseinrichtung 60 und mit einer und/oder mehreren Amplituden-/Phasenmasken 49.1 in einem Filter-/Strahlteilerrad 49 und mit spektraler, ortsauflösender Zwei-Kanal-Detektion,
- Fig. 18: Laser-Scanning-Mikroskop mit ultraschneller sensitiver und ortsauflösender Detektionseinrichtung 60 und mit einer und/oder mehreren Amplituden-/Phasenmasken 48.1 in einer Objektivpupille und mit einer und/oder mehreren Amplituden-/Phasenmasken 49.1 im Filter-/Strahlteilerrad 49.

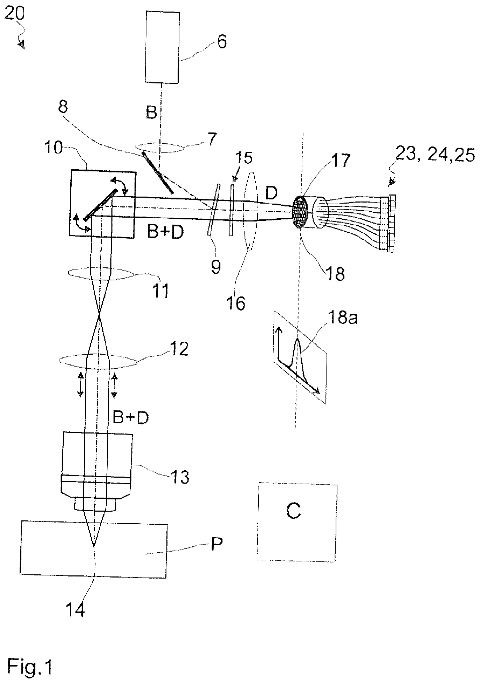

Fig. 1 zeigt schematisch ein Laserscanningmikroskop 20, das zum Mikroskopieren einer Probe P ausgebildet ist. Das Laserscanningmikroskop (nachfolgend als LSM abgekürzt) wird von einem Steuergerät C gesteuert und umfasst einen Beleuchtungsstrahlengang B sowie einen Abbildungsstrahlengang P. Der Beleuchtungsstrahlengang beleuchtet einen Spot in der Probe, und der Abbildungsstrahlengang 4 bildet diesen Spot P beugungsbegrenzt zur Detektion ab. Beleuchtungsstrahlengang und Abbildungsstrahlengang teilen sich eine Vielzahl von Elementen. Dies ist aber ebenso wenig zwingend, wie eine gescannte Spot-Beleuchtung der Probe. Diese könnte auch weitfeldbeleuchtet werden.

Die Beleuchtung der Probe P erfolgt im LSM 20 mittels eines bereitgestellten Laserstrahls, der auf einen Spiegel 8 eingekoppelt wird. Der Spiegel 8 sorgt dafür, dass der Laserstrahl unter einem Reflexionswinkel auf einen Emissionsfilter 9 fällt. Zur übersichtlicheren Darstellung ist für den Laserstrahl lediglich dessen Hauptachse eingezeichnet.

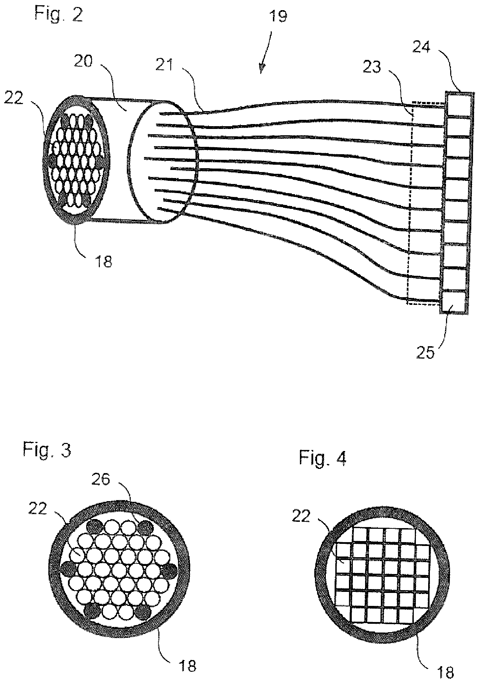

Nach Reflexion am Emissionsfilter 9 wird der Laserstrahl von einem Scanner 10 zweiachsig abgelenkt und mittels Linsen 11 und 12 durch ein Objektiv 13 in einen Spot 14 in der Probe 2 fokussiert. Der Spot ist dabei in der Darstellung der Fig. 1 punktförmig, es ist jedoch auch ein linienförmiger Spot möglich. Im Spot 14 angeregte Fluoreszenzstrahlung wird über das Objektiv 13, die Linsen 11 und 12 wieder zum Scanner 10 gelangt, nach dem in Abbildungsrichtung wiederum ein ruhender Lichtstrahl vorliegt. Dieser fällt durch die Emissionsfilter 9 und 15, welche die Funktion haben, die Fluoreszenzstrahlung im Spot 14 hinsichtlich ihrer Wellenlänge zu selektieren und insbesondere von der Beleuchtungsstrahlung des Laserstrahls, die beispielsweise als Anregungsstrahlung dienen kann, zu trennen. Eine Linse 16 sorgt dafür, dass insgesamt der Spot 14 in ein beugungsbegrenztes Bild 17 abgebildet wird, welches in einer Detektionsebene 18 liegt. Die Detektionsebene 18 ist eine konjugierte Ebene zur Ebene, in welcher der Spot 14 in der Probe 2 liegt. Das Bild 17 des Spots 14 wird in der Detektionsebene 18 von einer Detektoreinrichtung aufgenommen, die nachfolgend anhand der Figuren 2 bis 4 näher erläutert wird. Wesentlich ist hier, dass die Detektoreinrichtung das beugungsbegrenzte Bild 17 des Spots 14 in der Detektionsebene 18 räumlich auflöst.

Die Intensitätsverteilung des Spots über den Detektionsquerschnitt (Gaussverteilung) in 18 ist als 18a darunter in Fig. 1 dargestellt.

Das Steuergerät C steuert alle Komponenten des LSM, insbesondere Scanner 10 und Detektoreinrichtung. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe P.

Das LSM der Fig. 1 ist exemplarisch für einen einzigen Spot, der auf der Probe abgetastet wird, dargestellt. Es kann jedoch zugleich auch zur Abtastung gemäß einem Linien-Spot verwendet werden, der sich beispielsweise senkrecht zur Zeichnungsebene der Fig. 1 erstreckt. Auch ist es möglich, das LSM der Fig. 1 so auszuführen, dass mehrere nebeneinanderliegende Punkt-Spots in der Probe abgetastet werden. Ihre entsprechenden Einzelbilder 17 liegen dann in der Detektionsebene 18 ebenfalls nebeneinander. Die Detektoreinrichtung ist dann entsprechend ausgestaltet, um die nebeneinanderliegenden Einzelbilder 17 in der Detektionsebene 18 zu erfassen.

Die Detektoreinrichtung 19 ist vergrößert in Fig. 2 dargestellt. Sie besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das beugungsbegrenzte Bild 17 des Spots 14 aufgenommen wird. Da der Spot 14 in der Ausführungsform der Fig. 1 exemplarisch ein Punkt-Spot ist, ist das Bild 17 ein Airy-Scheibchen, dessen Ausdehnung innerhalb des Kreises liegt, welcher in den Figuren 1 und 2 die Detektionsebene 18 veranschaulicht. Die Ausdehnung des Lichtleitfaserbündeleingangs 22 ist also so groß, dass damit die Ausdehnung der Airy-Scheibe abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Die geometrische Ausdehnung des Umverteilungselementes ist ganz grundsätzlich, d. h. unabhängig von seiner Realisierung, die in Fig. 4 durch ein Faserbündel erfolgt, eingangsseitig an die Ausdehnung des Einzelbildes (bzw. im Falle mehrerer Punkt-Spots der nebeneinanderliegenden Einzelbilder) angepasst. Das Umverteilungselement hat die Funktion, aus der Detektionsebene 18 die Strahlung so aufzunehmen, dass gemessen am Abtasttheorem die Intensitätsverteilung des Einzelbildes 17 bezogen auf die Beugungsgrenze überabgetastet wird, das Umverteilungselement hat also in der Detektionsebene 18 liegende Pixel (in der Bauweise der Fig. 3 durch die Eingangsenden der Lichtleitfasern gebildet), die mindestens um den Faktor 2 kleiner sind als die kleinste auflösbare Struktur, die sich aus der Beugungsgrenze unter Berücksichtigung des Abbildungsmaßstabes in der Detektionsebene 18 ergibt.

Natürlich ist die Verwendung eines Steckers 23 nur eine von vielen Möglichkeiten, die ausgangsseitigen Enden der Lichtleitfasern 21 vor den Pixeln 25 anzuordnen. Gleichermaßen ist es möglich, andere Verbindungen zu verwenden. Auch können die einzelnen Pixel 25 direkt mit den Lichtleitfasern 21 fusioniert werden. Es ist nicht einmal erforderlich, eine Detektorzeile 24 zu verwenden; stattdessen kann für jedes Pixel 25 ein einzelner Detektor verwendet werden.

Die Figuren 3 und 4 zeigen mögliche Ausführungsformen des Lichtleitfaserbündeleingangs 22. Die Lichtleitfasern 21 können am Lichtleitfaserbündeleingang 22 miteinander verschmolzen werden. Hierdurch wird ein höherer Füllfaktor erreicht, d. h. Lücken zwischen den einzelnen Lichtleitfasern 21 am Lichtleitfaserbündeleingang 22 werden minimiert. Das Verschmelzen führ andererseits zu einem gewissen Übersprechen zwischen benachbarten Lichtleitfasern. Möchte man dieses vermeiden, können die Lichtleitfasern geklebt werden. Auch ist eine quadratische Anordnung der Enden der Lichtleitfasern 21 möglich, wie Fig. 4 zeigt.

Bevorzugt sind die einzelnen Lichtleitfasern 21 so den einzelnen Pixeln 25 des Detektorarrays 24 zugeordnet, dass am Lichtleitfaserbündeleingang 22 nebeneinander liegende Lichtleitfasern 21 auch am Detektorarray 24 nebeneinander liegen. Durch dieses Vorgehen minimiert man Übersprechen zwischen benachbarten Pixeln 25, das beispielsweise durch Streustrahlung oder in der Signalverarbeitung der einzelnen Pixel 25 auftreten kann. Ist das Detektorarray 24 eine Zeile, kann man die entsprechende Anordnung dadurch erreichen, indem die Reihenfolge der Einzellichtleitfasern auf der Detektorzeile durch eine Spirale festgelegt wird, welche in Draufsicht auf die Detektionsebene 18 die Einzellichtleitfasern nacheinander verbindet.

Fig. 3 zeigt weiter noch Blindfasern 26, die in den Ecken der Anordnung der Lichtleitfasern 21 am Lichtleitfaserbündeleingang 22 liegen. Diese Blindfasern sind nicht auf Pixel 25 des Detektorarrays geführt. An den Orten der Blindfasern wäre keine für die Auswertung der Signale erforderliche Signalintensität mehr vorhanden. Man kann dadurch die Anzahl der Lichtleitfasern 21 und damit die Anzahl der Pixel 25 in der Detektorzeile 24 oder dem Detektorarray so reduzieren, dass beispielsweise mit 32 Pixeln gearbeitet werden kann. Solche Detektorzeilen 24 sind bereits anderweitig in Laser-Scanning-Mikroskopen im Einsatz, was den Vorteil hat, dass die Signalauswerteelektronik in solchen Laser-Scanning-Mikroskopen nur einmal vorgehalten werden muss und zwischen einer bereits bestehenden Detektorzeile 24 und der durch die Detektoreinrichtung 19 hinzugekommenen weiteren Detektorzeile 24 umgeschaltet wird.

Gemäß Fig. 4 werden Lichtleitfasern mit quadratischer Grundform für das Bündel verwendet. Sie haben ebenfalls einen hohen Abdeckungsgrad in der Detektionsebene, sammeln die Strahlung also effizient auf.

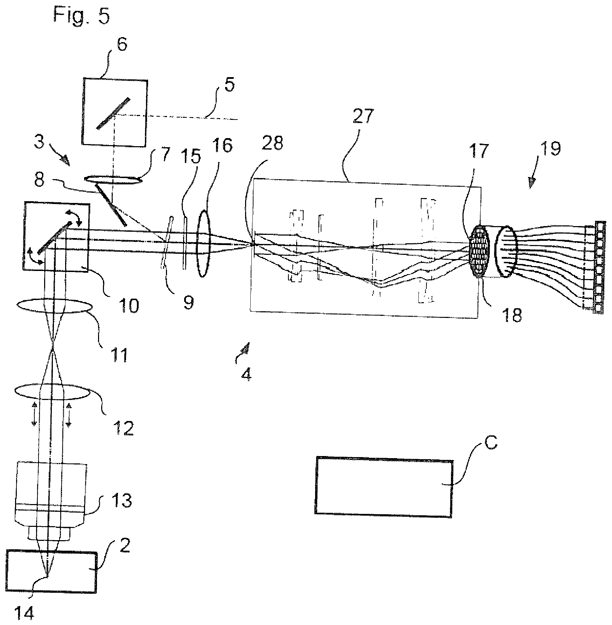

Fig. 5 zeigt eine Weiterbildung des LSM der Fig. 1, in dem der Detektionsebene 18 eine Zoomoptik 27 vorgeordnet ist. Die konjugierte Ebene, in welcher bei der Bauweise der Fig. 1 die Detektionsebene 18 angeordnet wurde, bildet nun eine Zwischenbildebene 28, aus welcher die Zoomoptik 27 die Strahlung aufnimmt und zur Detektionsebene 18 leitet. Die Zoomoptik 27 erlaubt es, das Bild 17 optimal an die Ausdehnung des Eingangs der Detektoreinrichtung 19 anzupassen. Zudem trägt die Probe hier das Bezugszeichen 2, der Abbildungsstrahlengang das Bezugszeichen 4, der Beleuchtungsstrahlengang das Bezugszeichen 3 und der Laserstrahl, welcher über einen nicht weiter funktionell erforderlichen Umlenkspiegel 6 und eine Linse 7 geführt wird, das Bezugszeichen 5.

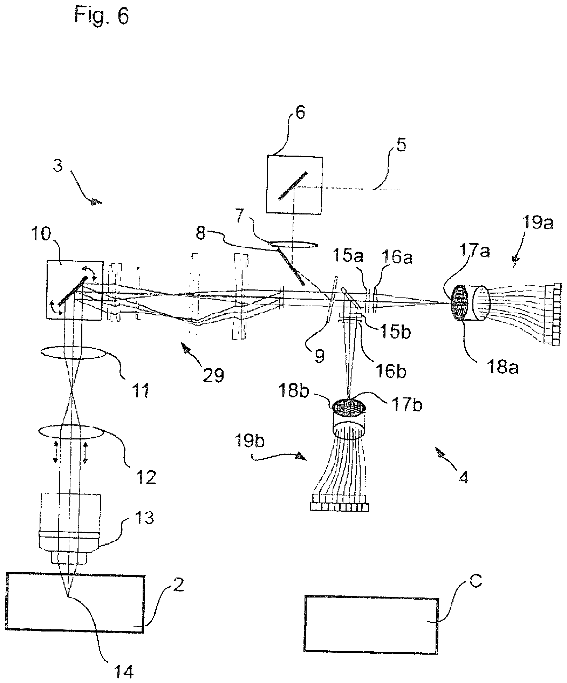

Fig. 6 zeigt eine nochmalige Abwandlung des Laser-Scanning-Mikroskops der Fig. 1/5. Zum einen ist hier die Zoomoptik als Zoomoptik 29 so angeordnet, dass sie im Teil des Strahlenganges liegt, der sowohl vom Beleuchtungsstrahlengang 3 als auch vom Abbildungsstrahlengang 4 durchlaufen wird. Man erhält damit den Vorteil, dass nicht nur die Größe des Bildes 17 auf der Eingangsseite der Detektoreinrichtung 19 angepasst werden kann, es kann auch bezüglich des Abbildungsstrahlenganges 4 die Pupillenfüllung des Objektivs 13 und damit die Ausnutzung des Laserstrahls 5 angepasst werden.

Zusätzlich ist in Fig. 6 das LSM noch zweikanalig ausgebildet, indem dem Emissionsfilter 9 ein Stahlteiler nachgeordnet ist, welcher die Strahlung in zwei getrennte Farbkanäle abtrennt. Die entsprechenden Elemente der Farbkanäle entsprechen jeweils den Elementen, die im LSM 1 der Fig. 1 dem Emissionsfilter 9 in Abbildungsrichtung nachgeordnet sind. Die Farbkanäle sind in der Darstellung der Fig. 6 durch das Bezugszeichensuffix "a" bzw. "b" unterschieden.

Natürlich ist die Realisierung mit zwei Farbkanälen unabhängig von der Verwendung der Zoomoptik 29. Die Kombination hat jedoch den Vorteil, dass eine Zoomoptik 27, die in beiden Farbkanälen jeweils eigenständig vorgesehen werden müsste und damit doppelt vorhanden wäre, nur einmal erforderlich ist. Selbstverständlich kann jedoch die Zoomoptik 27 auch in der Bauweise gemäß Fig. 1 zum Einsatz kommen und das LSM 1 der Fig. 6 kann auch ohne Zoomoptik 29 verwirklicht werden.

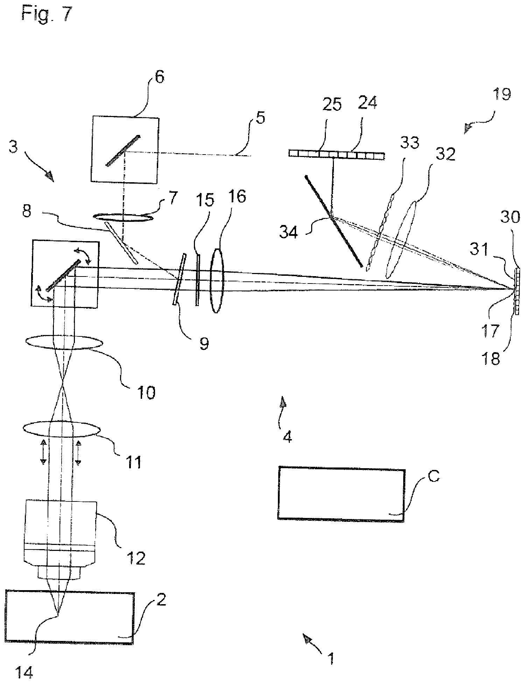

Fig. 7 zeigt eine Abwandlung des LSM der Fig. 1/5 hinsichtlich der Detektoreinrichtung.

Die Detektoreinrichtung 19 weist nun einen Facettenspiegel 30 auf, der einzelne Facetten 31 trägt. Die Facetten 31 entsprechen hinsichtlich der Auflösung des Bildes 17 den Enden der Lichtleitfasern 21 am Lichtleitfaserbündeleingang 22. Die einzelnen Facetten 31 unterscheiden sich hinsichtlich ihrer Neigung zur optischen Achse des Strahlungseinfalls. Zusammen mit einer Linse 32 und einem Minilinsenarray 33 sowie einem nur der Strahlfaltung dienenden Umlenkspiegel 34 bildet jede Facette 31 einen Flächenabschnitt des Einzelbildes 17 auf ein Pixel 25 eines Detektorarrays 24 ab. Je nach Orientierung der Facetten 31 kann das Detektorarray 24 dabei bevorzugt ein 2D-Array sein, aber auch eine Detektorzeile ist möglich.

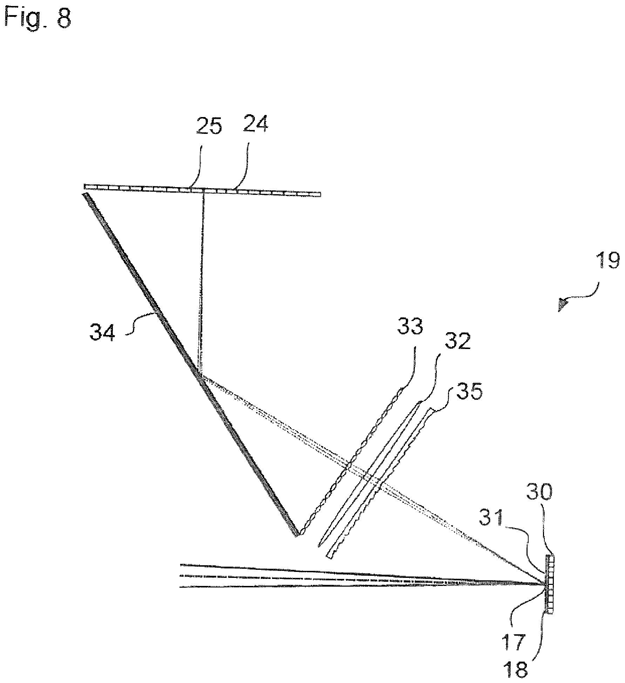

Fig. 8 zeigt eine Weiterbildung der Detektoreinrichtung 19 der Fig. 7, in welcher der Linse 32 noch ein refraktives Element 35 vorgeordnet ist, das die Strahlung besonders gut auf eine Detektorzeile verteilt.

Das Detektorarray 24 kann, wie bereits erwähnt, hinsichtlich seiner Geometrie ohne weitere Einschränkungen gewählt werden. Selbstverständlich muss das Umverteilungselement in der Detektoreinrichtung 19 dann auf das entsprechende Detektorarray angepasst werden. Die einzelnen Pixel, mit denen das Bild 17 aufgelöst wird, sind letztlich hinsichtlich ihrer Größe nicht mehr durch das Detektorarray 24 vorgegeben, sondern durch das Element, welches die Umverteilung der Strahlung aus der Detektionsebene 18 bewirkt. Bei einer Airy-Scheibe ergibt sich der Durchmesser der Scheibe bei einer beugungsbegrenzten Abbildung gemäß der Formel 1,22 λ/NA, wobei λ die mittlere Wellenlänge der abgebildeten Strahlung und NA die numerische Apertur des Objektivs 13 ist. Die Halbwertsbreite ist dann 0,15 λ/NA. Um die Hochauflösung zu erreichen, genügt es, die Ortsauflösung bei der Detektion doppelt so groß wie die Halbwertsbreite zu gestalten, d. h. die Halbwertsbreite zweimal abzutasten. Ein Facettenelement 31 bzw. ein Ende einer Lichtleitfaser 21 am Lichtleitfaserbündeleingang 22 darf somit maximal halb so groß wie die Halbwertsbreite des beugungsbegrenzten Einzelbildes sein. Dies gilt natürlich unter Berücksichtigung des Abbildungsmaßstabes, den die Optik nach dem Objektiv 13 bewirkt. Im einfachsten Fall würde also ein 4x4-Array von Pixeln in der Detektionsebene 18 pro Halbwertsbreite mehr als genügen.

Die Zoomoptik, welche anhand der Figuren 5 und 6 erläutert wurde, erlaubt neben einer Anpassung dergestalt, dass die Beugungsverteilung des beugungsbegrenzten Bildes 17 des Spots 14 die Eingangsfläche der Detektoreinrichtung 19 optimal ausfüllt, auch noch eine weitere Betriebsart, wenn nämlich mehr als eine Airy-Scheibe in die Detektionsebene 18 abgebildet wird. Bei einer Messung, bei der mehr als eine Airy-Scheibe auf die Detektoreinrichtung 19 abgebildet wird, wird Licht aus weiteren Tiefenebenen der Probe 2 an den äußeren Pixeln der Detektoreinrichtung 19 detektiert. Im Zuge der Verarbeitung des Bildes erhält man dabei zusätzliche Signalstärke, ohne dass die Tiefenauflösung des LSM beeinträchtigt wäre. Die Zoomoptik 27 bzw. 29 erlaubt es somit, einen Kompromiss zwischen Signal-/Rauschverhältnis des Bildes und Tiefenauflösung einzustellen.

In Fig. 1-8 ist eine schnelle, sensitiven und rauscharmen Multi-Element-Detektionseinrichtung auf der Basis eines Faserbündels und eines PMT-Arrays beschrieben, so dass eine verbesserte Auflösung bei gleichzeitig gutem Signal-zu-Rausch-Verhältnis für eine LSM erreicht werden kann.

Fig. 9 zeigt Beispiele für Phasen-/Amplitudenfunktionen in der Pupille und dazugehörige Querschnitte durch die 2D-lntensitätsverteilung der Beleuchtung im Fokus eines Objektivs.

Auf der linken Seite sind unterschiedliche Phasenmasken dargestellt, auf der rechten Seite die entstehende Intensitätsverteilung in der Objektebene in Abhängigkeit von der lateralen Position zur optischen Achse bei Einsatz der Maske in einer Objektivpupille in der Beleuchtung.

In Fig. 9a) ist links eine Phasenmaske mit einem erzeugten Phasensprung von Pi zwischen der rechten und linken Seite dargestellt (Halbpupillen-Phasenmaske).

Rechts wird die Erzeugung von zwei räumlich getrennten, dicht nebeneinander liegenden Spots S1 und S2 statt eines Mittig liegenden Spots S mit Airy-Profil ohne den Einsatz der Phasenmaske dargestellt.

In Fig. 9b) ist eine Spiralphasenmaske mit zirkularer azimutal zunehmender Phasenänderung dargestellt, mit einer maximalen Phasenverzögerung von 2 Pi und rechts die entstehende Intensitätsverteilung. In Fig. 9c) handelt es sich um eine Spiralphasenmaske mit einem Phasensprung bis 4 Pi.

### Hierdurch liegen die rechts dargestellten Spots weiter auseinander als in Fig. 9b)

In Fig. 9d) ist eine Überlagerung eine Halbraummaske wie in a) mit einer zusätzlichen Transmissionsänderung dargestellt, beispielsweise durch eine Kombination aus einer Amplitudenmaske A und einer Phasenmaske P.

Diese können durch entsprechende Beschichtung auch als eine Maske realisiert sein.

Es wird deutlich, dass die dargestellten Beleuchtungslichtverteilungen eine Parallelisierung in der Bildaufnahme unter Verwendung der beschriebenen Detektionseinrichtung 60 (wirkend als Kamera) ermöglichen. Denn es entstehen unter Verwendung der Masken mehrere Beleuchtungsspots, die allerdings sehr dicht beieinander liegen, so dass Crosstalk-Probleme bei dickeren Proben resultieren können. Durch die genannte Parallelisierung wird die Bildaufnahmegeschwindigkeit erhöht. Es ist darauf hinzuweisen, dass die Modulation der Beleuchtung sich beim Auftreten von Aberrationen, die auch mit zunehmender Eindringtiefe in die Probe entstehen können, verändern wird. Eventuell kann hier in fachmännischer Weise adaptive Optik die Abbildungsfehler korrigieren.

Fig. 10a) veranschaulicht das Intensitätsprofil der Beleuchtung im Fokus unter Verwendung einer Halbpupillen-Phasen-Rampe HPR.

Die beiden Phasenrampen in den jeweiligen Halbpupillen weisen einen zueinander invertierten Verlauf der Phasenänderung von oben nach unten auf.

Die Phasenrampe in den jeweiligen Halbpupillen entspricht hier einem Glaskeil mit einem Keilwinkel von typischerweise einer Minute.

Auch hier entstehen zwei dicht beieinander liegende Beleuchtungsspots. Es ist aber festzustellen, dass sich die Symmetrie der Beleuchtung außerhalb vom Fokus - vergleiche die Aufnahmen in Fig. 10b) und Fig. 10c) - verändert. (in Fig. 10c 200 nm außerhalb vom Fokus], Dies kann von Vorteil sein, wenn es darum geht mit weniger Schnittbildern eine 3D-Struktur aufzunehmen. Dies wird möglich, weil sich Licht aus unterschiedlichen z-Ebenen räumlich etwas anders auf der Kamera (Eintrittsflächen der Faserbündel gemäß Fig. 1-8) verteilt.

Bevor die Daten mit dieser axial strukturierten Beleuchtung schneller und besser aufgelöst verrechnet und entfaltet werden können, wird in bekannter Weise, aber unter Umständen mit weniger Bildern, durch das LSM ein z-Stapel von Bildern aufgenommen.

Eine weitere geeignete Beleuchtungslichtverteilung zur Steigerung der Bildaufnahmegeschwindigkeit bei der Aufnahme von 3D-Probenvolumina (z-stacks) ist durch eine rotierende Doppel-PSF gemäß Pavani et al. (Lit. [8]) gegeben.

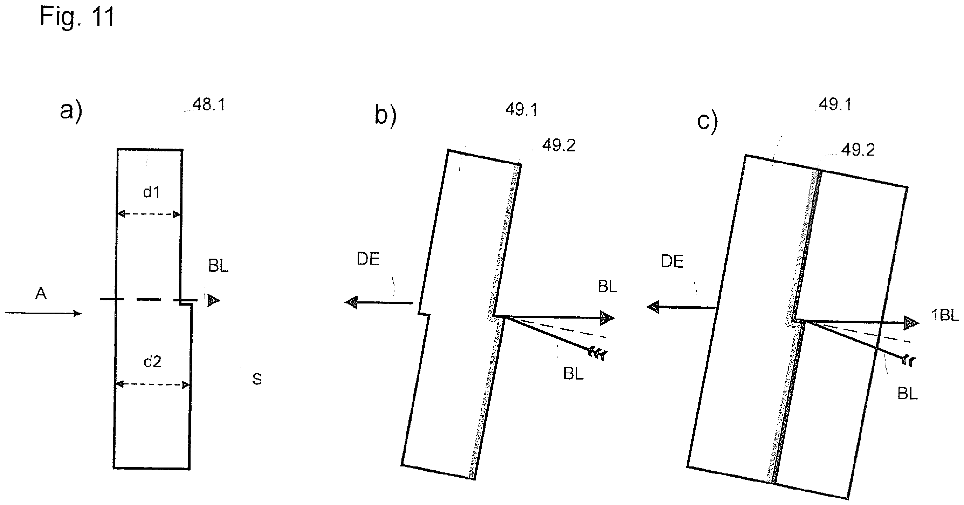

Anhand von Fig. 11 wird ersichtlich, dass je nach Position der Phasen-/Amplitudenmaske, die Maske auf die Beleuchtung, die Detektion oder auf Beleuchtung und Detektion einwirkt. Befindet sich die Maske an einer Position im Beleuchtungsstrahlengang, die das Detektionslicht nicht passiert, so ist die Maske gemäß Fig. 11a) zu gestalten. Beispielhaft dargestellt ist eine lichtdurchlässige Platte 48.1 die oberhalb und unterhalb einer Sprungkante S oder eines Sprungpunktes unterschiedliche Dicken d1, d2 im Querschnitt aufweist.

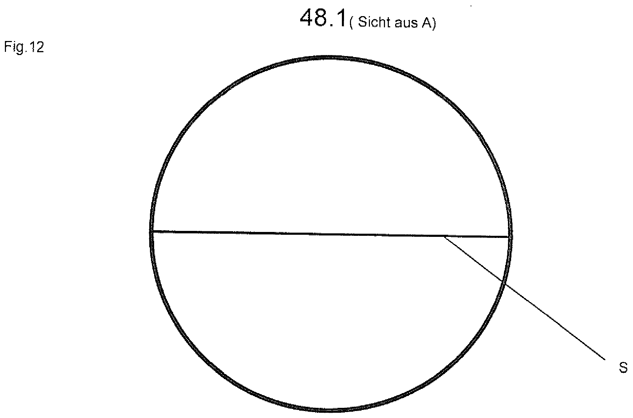

In Fig. 12 ist eine π-Step-Phasen-Maske in der Ansicht aus Richtung A in Fig. 11 a) schematisch dargestellt. Das Beleuchtungslicht BL erfährt dadurch in der Pupille einen Phasensprung analog Fig. 9a).

Würde sich die gleiche Platte in einem gemeinsamen Strahlengang von Beleuchtung und Detektion befinden, so würde auch die Detektion von der Phasen-/Amplitudenmaske beeinflusst werden. Dies ist jedoch unerwünscht, um das detektierte Bild nicht zu verfälschen. Abhilfe können Masken gemäß Fig. 11b) und Fig. 11c) leisten, die die Wirkung auf die Detektion beseitigen, in dem das Detektionslicht auch die inverse Phasenstruktur und damit insgesamt quasi insgesamt eine Planparallelplatte durchläuft.

Die Glasplatte in Fig. 11b) ist derart strukturiert, dass für zwei Positionen, die spiegelsymmetrisch zur optischen Achse in einer Ebene liegen, wobei die Ebene nahezu senkrecht zur optischen Achse ausgerichtet sein soll, die optische Phase in Transmission identisch ist.

Die strukturierte Glasplatte in Fig. 11 b), die als Hauptfarbteiler wirkt, weist zusätzlich eine dichroitische Schicht 49. 2 auf und bewirkt die Trennung von Beleuchtungs-(Anregungs)-licht BL und Probenlicht DE. Das Beleuchtungslicht BL wird an der dichroitischen Schicht 49.2 reflektiert und gelangt in Richtung der Probe (siehe Fig. 1-8). Das Detektionslicht der Probe DE wird, da es den Stokesshift aufweist, an der entsprechend ausgebildeten dichroitischen Schicht in Richtung der Detektion transmittiert.

Die dem Beleuchtungslicht durch 49.1 aufgeprägte Phasenverteilung wird dem Probenlicht DE beim Durchgang durch 49.1 ebenfalls, aber halb so groß, aufgeprägt, aber beim Austritt aus der strukturierten Glasplatte durch die inverse Oberflächenstruktur wieder aufgehoben und DE gelangt somit ohne aufgeprägte Phasendifferenz in Richtung Detektionseinrichtung.

Auch bei Verwendung von Phasenmasken gemäß Fig. 9 b)-d) und Fig. 10 kann der gleiche Mechanismus wie in Fig. 9b) bzw. Fig. 9c), zur Vermeidung einer räumlich variierenden Phasenverteilung auf dem Detektionslicht DE, angewendet werden.

Eine technisch bevorzugte Ausführungsform eines Laser-Scanning-Mikroskops unter Verwendung einer ultraschnellen sensitiven ortsauflösenden Detektionseinrichtung 60 in Anlehnung an Fig. 1-8 und unter Verwendung einer Amplituden-/Phasenmaske 48.1 ausschließlich im Beleuchtungsstrahlengang 45 wird in Fig. 13 gezeigt. Das Probenlicht 53, in der Probe vom Beleuchtungslicht erzeugt, eingesammelt vom Objektiv, muss auf dem Weg zur Detektionseinrichtung 60, bestehend aus dem Faserbündel 64 und der eigentlichen Detektionseinrichtung 61 mit den Detektorelementen 62, nicht durch die Amplituden-/Phasenmaske 48.1 hindurchpropagieren. Die Vereinigung bzw. Trennung von Beleuchtung und Detektion erfolgt an einem Farbteiler 49.1 auf einem Farbteilerrad 49.

Die Struktur des Beleuchtungsmusters - z.B. zwei oder drei Beleuchtungsspots, findet sich auf dem Faserbündel 64 wieder. D.h. hier entstehen z.B. nahezu zwei oder drei Detektionsspots, die aber durch die Wechselwirkung der Beleuchtung mit der Probe und durch die Faltung mit der Detektions-Punktbildfunktion verbreitert bzw. verändert sind.

Zwar wird bei fester Anzahl an Fasern im Faserbündel u.U. die Auflösung verringert, jedoch die Scangeschwindigkeit erhöht, z.B. verdoppelt.

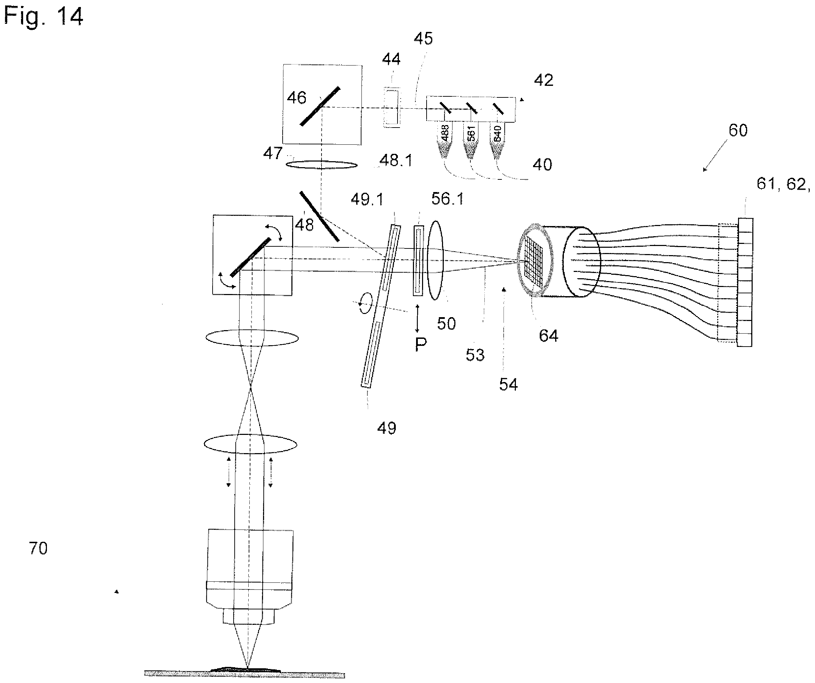

Im Unterschied zur technisch bevorzugten Ausführungsform in Fig. 13 befindet sich in Fig. 14 eine Amplituden-/Phasenmaske 56.1 ausschließlich im Detektionsstrahlengang. Diese kann erfindungsgemäß zur Steigerung der Aufnahmegeschwindigkeit von 3D-stacks oder axialen Auflösung-/Kontrastverbesserung verwendet werden. Die Maske 56.1 kann dabei eine Struktur gemäß Fig. 10 haben, indem sie parallele Detektionsspots auf der Verteilung der Lichtleiter-Eintrittsflächen 64 erzeugt.

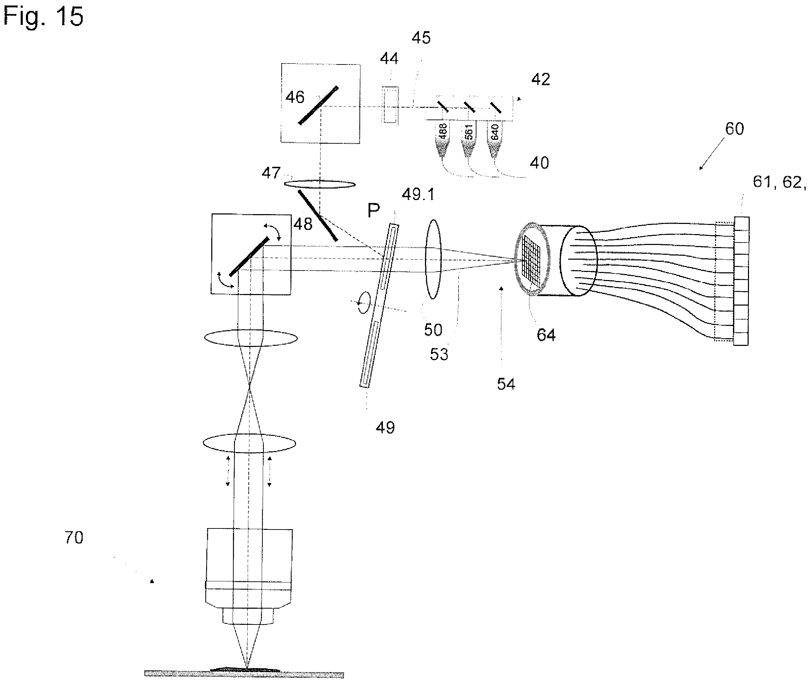

Fig. 15 zeigt eine erfindungsgemäße und technologisch bevorzugte Ausführungsform eines LSMs bei dem sich die Amplituden-/Phasenmaske 49.1 im gemeinsamen Strahlengang von Beleuchtungslicht 45 und Detektionslicht 53 befindet. Die Amplituden-/Phasenmaske 49.1 auf dem Filterrad 49 muss hierbei auch die Funktion der Farbteilung übernehmen, das heißt die Amplituden-/Phasenmaske 49.1 besitzt auch ein dichroitisches Schichtsystem für das Beleuchtungslicht. Die Grundform ist gemäß Fig. 11b) und 11c) so zu gestalten, dass die Wirksamkeit ausschließlich auf das Beleuchtungslicht 45 beschränkt sein soll (Aufhebung der Phasendifferenz in Detektionsrichtung).

Grundsätzlich kann das Filterrad 49 dazu dienen, wahlweise Phasenmasken oder einfache dichroitische Strahlteiler in den Strahlengang einzuführen.

Gleichfalls können im Beleuchtungsstrahlengang und/oder Detektionsstrahlengang eingesetzte Phasenmasken, wie durch Pfeile schematisch dargestellt, aus dem Strahlengang ausschiebbar ausgebildet sein, so dass eine maximale Flexibilität bezüglich einstellbarer Beleuchtungs- und/ oder Detektionsmodi gewährleistet ist.

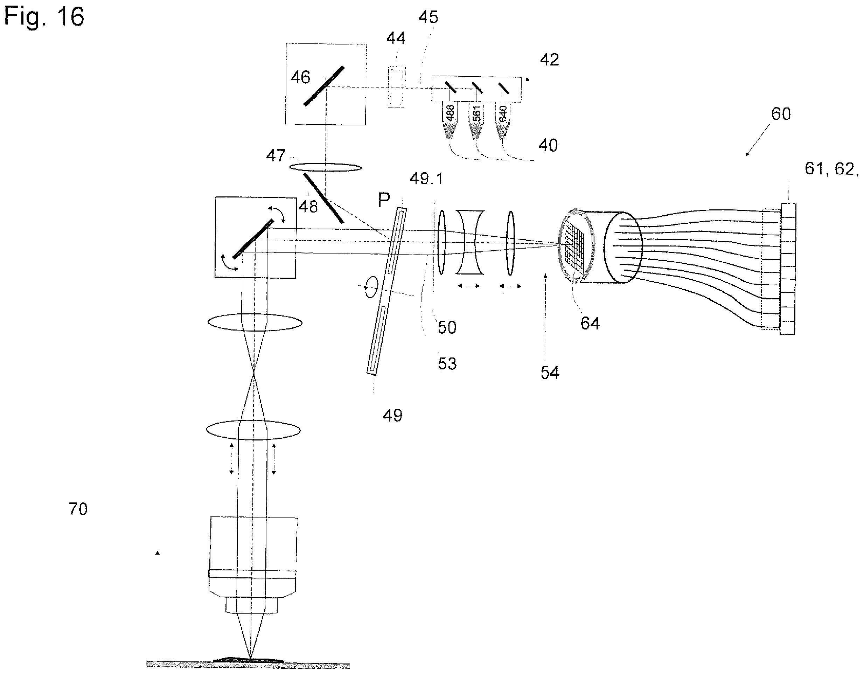

Fig. 16 unterscheidet sich von Fig. 15 insofern, als dass sich eine einstellbare Fokussieroptik 20 vor der Detektionseinrichtung 60 befindet. Diese übernimmt die Aufgabe der Größenanpassung der Detektionslichtverteilung 53 an die Detektionseinrichtung 60 für eine geeignete Abtastung. Die Größenanpassung kann in Abhängigkeit vom Wellenlängenbereich des Detektionslichtes 53 und/oder vom verwendeten Objektiv zur Pupillenanpassung und/oder in Abhängigkeit von der durch die Maske 49.1 oder Maske gemäß Fig. 13 mit einer ausschließlich im Beleuchtungsstrahlengang erzeugten Beleuchtungslichtverteilung 45 (z.B. zwei Spots oder vier Spots) erforderlich werden.

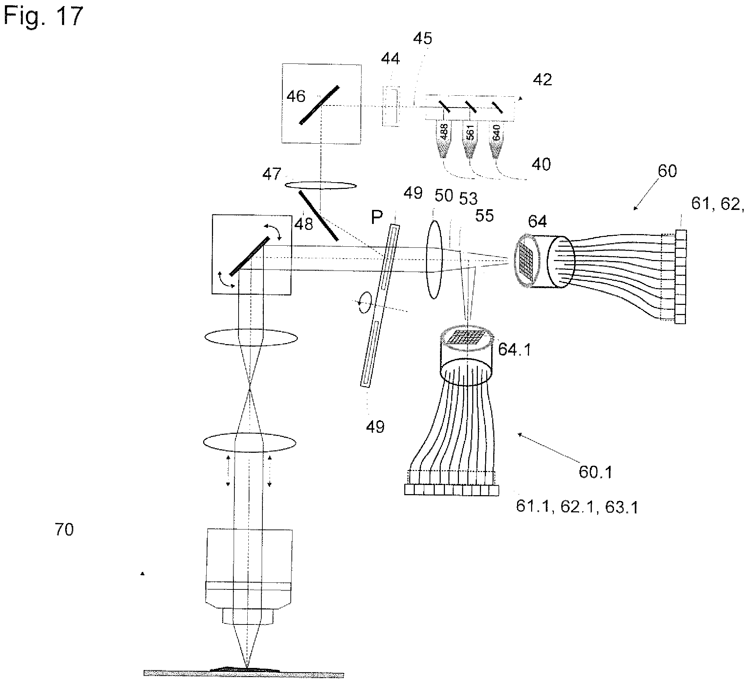

Fig. 17 veranschaulicht eine technisch bevorzugte Ausführungsform mit mindestens zwei Detektionseinrichtungen 60 und 60.1 zur Detektion von Detektionslicht 53, welches sich nach Trennung durch mit einem Farbteiler 55 spektral unterscheidet, wobei es auch einen Überlapp zwischen den Wellenlängenbereichen des Detektionslichtes 53, detektiert von den mindestens beiden Detektionseinrichtungen 60 und 60.1, geben kann.

Die Phasenmaske könnte beispielsweise auf 49 angeordnet sein.

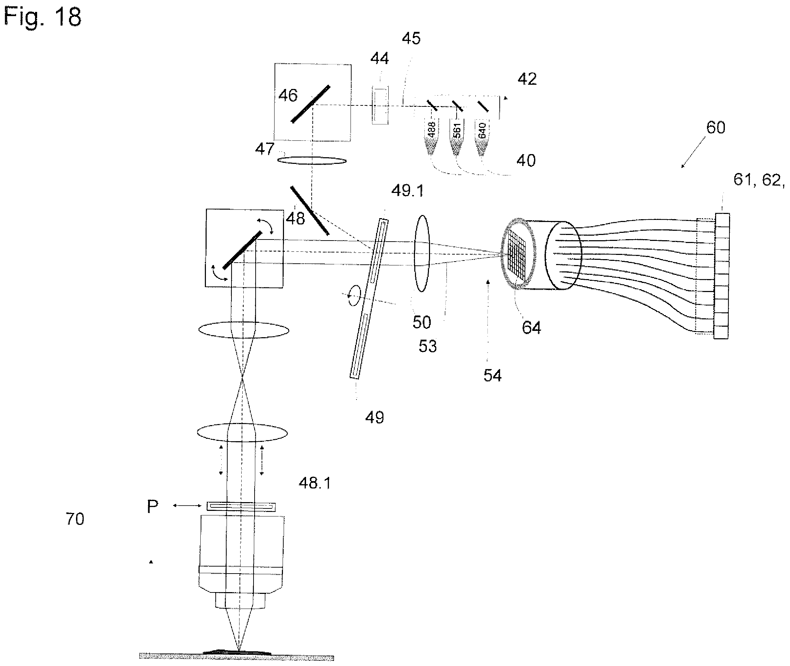

In Fig. 18 wird eine Ausführungsform präsentiert, bei der sich die Amplituden-/Phasenmaske 48.1 direkt in der Pupille bzw. pupillennah am Objektiv befindet. Für kleine Abtastwinkel ist der Vorteil dieser Ausführungsform, dass es zu keiner Asymmetrie hinsichtlich der Lichtverteilung bzgl. der Amplituden-/Phasenmaskenbereiche von 48.1 kommen kann, wenn die Abtasteinrichtung nicht exakt in der Pupille (Fokus) der Scanoptik steht. Es muss aber sicher gestellt sein, dass es zu keiner Änderung der Wirkung der Amplituden-/Phasenmaske 48.1 bei Änderung des Abtastwinkels kommt. Ein Nachteil dieser Anordnung ist, dass das Detektionslicht 53 ebenfalls die Maske 48.1 durchläuft und damit verändert wird. Man kann dies nur verhindern, insbesondere wenn es sich bei 48.1 um eine Phasenmaske handelt, indem eine inverse Phasenmaskenstruktur im Farbteilerrad 49 als Phasenmaske 49.1 einfügt, die nur auf die Detektion 53 einwirkt.

Dies kann erfolgen, indem beispielsweise auf der der dichroitischen Schicht abgewandten Seite des Strahlteilers in Richtung der Detektion eine inverse Phasenmaske aufgeprägt oder beschichtet ist, die ausschließlich auf das (wie in Fig. 11 dargestellt) transmittierte Detektionslicht einwirkt und die Wirkung von 48.1 aufhebt.

Realisierbar wird dies alternativ, indem sich auf der ebenen dem Detektionslicht 53 zugewandten Seite von 49.1 ein dichroitisches Schichtsystem befindet, so dass das Beleuchtungslicht 44 nicht von der Maske 49.1 beeinflusst wird (siehe Fig. 11 b), c)).

### Literatur:

[1] Heintzmann R.; Cremer C.: Laterally Modulated Excitation Microscopy: Improvement of resolution by using a diffraction grating; In Proceedings of SPIE, Vol. 3568 (1998)
[2] Shao L.; Kner P.; Hesper E.; Gustafsson Mats G. L: Super-resolution 3D-microscopy of live whole cells using structured illumination; In Nature Methods, Vol. 8 (2011)
[3] Bertero et al., In Inverse Problems 3, 195 (1988)
[4] Sheppard et al., In Optik 80, No. 2, 53 (1982)
[5] Grochmalicki et al., In J. Opt. Soc. Am. A 10, 1074 (1993)
[6] C.B. Mueller et al., In Phys. Rev. Lett. 104, 198101 (2010)
[7] York A. G.; Parekh S. H. ; Nogare D. D.; Fischer R. S.; Temprine K.; Mione M.; Chitnis A.B.; Combs C. A.; Shroff H. : Resolution doubling in live, multicellular organisms via multifocal structured illumination microscopy; In Nature Methods, Vol. 9 (2012)
[8] Pavani S.R.P. and Piestun R.: High-efficiency rotating point spread functions; In Optics Express 16 (2008), p. 3484
[9] DE102006026204A1,
[10] DE102008059328A1.

### Bezugszeichenliste:

- BL:: Beleuchtungslicht
- DE:: Detektionslicht von der Probe
- d1, d2:: Dicke
- S:: Stufe, Kante
- 40:: Lichtquellen
- 42:: Spiegeltreppe mit teildurchlässigen Spiegeln / Farbteilern
- 44:: Akustooptisch durchstimmbarer Filter (AOTF)
- 45:: Beleuchtungslicht
- 46:: Spiegel
- 47:: Kollimationsoptik
- 48:: Spiegel
- 48.1, 56.1: Phasenmaske
- 49:: Strahl-/Farbteilerrad
- 49.1:: Filter, Neutral- oder Farbteiler, Phasenmaske(n)
- 50:: Detektionsoptik
- 53:: Detektionslicht
- 54:: Pinhole-Ebene
- 60:: ortsauflösende Detektionseinrichtung
- 60.1:: zweite ortsauflösende Detektionseinrichtung
- 61:: Detektionseinrichtung (Array-Detektor)
- 62:: Detektorelemente der ersten Detektionseinrichtung
- 61.1:: zweite Detektionseinrichtung (Array-Detektor)
- 62.1:: Detektorelemente der zweiten Detektionseinrichtung
- 64:: Faserbündel
- 64.1:: zweites Faserbündel
- 70:: Lichtmikroskop

## Patentansprüche

1. Mikroskop zur hochauflösenden Scanning-Mikroskopie einer Probe, mit
- einer Beleuchtungseinrichtung zum Beleuchten der Probe, die einen Beleuchtungsstrahlengang aufweist, welcher Beleuchtungslicht (45) über einen Hauptfarbteiler (49), einen Scanner (48) und ein Objektiv zur Probe führt,
- einer Abbildungseinrichtung zum Abbilden eines Punkt- oder Linien-Spots (S) auf der Probe in ein beugungsbegrenztes, ruhendes Einzelbild unter einem Abbildungsmaßstab in eine Detektionsebene, wobei die Abbildungseinrichtung einen Abbildungsstrahlengang aufweist, der Probenlicht (53) über das Objektiv, den Scanner (48) und den Hauptfarbteiler (49) in die Detektionsebene abbildet,
- einer Detektionseinrichtung (60) zum Erfassen des Einzelbildes in der Detektionsebene für verschiedene Scanpositionen des Scanners (48) mit einer Ortauflösung, welche unter Berücksichtigung des Abbildungsmaßstabes in mindestens einer Ausdehnung/Dimension mindestens doppelt so groß ist wie eine Halbwertsbreite des beugungsbegrenzten Einzelbildes,
- einer Auswerteeinrichtung zum Auswerten einer Beugungsstruktur des Einzelbildes für die Scanpositionen aus Daten der Detektionseinrichtung (60) und zum Erzeugen eines Bildes der Probe, das eine Auflösung aufweist, die über die Beugungsgrenze gesteigert ist, **dadurch gekennzeichnet, dass**
- im Beleuchtungsstrahlengang eine Phasenmaske (48.1, 49.1) mit lateral variierendem Verlauf der Phasenbeeinflussung angeordnet ist, die vom gesamten Beleuchtungslicht durchstrahlt wird, in oder nahe der Objektivpupille oder einer dazu konjugierten Ebene angeordnet ist und ausgebildet ist, in der Probe ein vom Punkt- oder Linien-Spot (S) verschiedenes Beleuchtungsmuster zu erzeugen, das mit dem Punkt- oder Linien-Spot (S) so überlappt, dass die Struktur des Beleuchtungsmusters innerhalb des von der Detektionseinrichtung (60) erfassten Bereiches liegt, wobei
- die Phasenmaske (48.1) entweder nur auf das Beleuchtungslicht (45) wirkt, oder
- die Phasenmaske (49.1) auf das Beleuchtungslicht (45) und das Probenlicht (53) wirkt, und eine Maske (48.1) mit zur Phasenmaske (49.1) inverser Phasenstruktur vorgesehen ist, die nur auf das Probenlicht (53) wirkt und die Wirkung der Phasenmaske (49.1) aufhebt,
wobei das Beleuchtungsmuster durch mehrere räumlich getrennte, nebeneinanderliegende Beleuchtungsspots (S1, S2) oder eine Beleuchtungslichtverteilung in Form eines Donut-Rings gebildet ist.

2. Mikroskop nach Anspruch 1, **dadurch gekennzeichnet, dass** die Phasenmaske (49.1) auch als der Hauptfarbteiler fungiert und ein das Beleuchtungslicht (45) reflektierendes dichroitisches Schichtsystem (49.2) für die Trennung von Probenlicht (53) und Beleuchtungslicht (45) aufweist, wobei die Phasenmaske (49.1) in ihrer Form so gestaltet ist, dass sie in Transmission und damit für das Probenlicht (53) keine Phasendifferenzen bewirkt.

3. Mikroskop nach Anspruch 2, **dadurch gekennzeichnet, dass** die als der Hauptfarbteiler ausgebildete Phasenmaske (49.1) auf einem Farbteilerrad (49) angebracht ist, das mehrere Phasenmasken trägt, die sich hinsichtlich ihrer Phasenbeeinflussung unterscheiden.

4. Mikroskop nach einem der obigen Ansprüche, **dadurch gekennzeichnet, dass** die Phasenmaske gemäß eine der folgenden Formen ausgebildet ist: als Halbpupillen-Phasenmaske mit auf beiden Seiten jeweils variierenden Phasenverlauf, wobei der Verlauf auf den beiden Seiten bevorzugt zueinander invers ist, als Phasenmaske mit einem Phasensprung, als Spiralphasenmaske, als Glasplatte mit unterschiedlicher Dicke entlang ihres Querschnitts zur Phasenbeeinflussung, als Phasenmaske mit einer Kante zur Trennung von Bereichen unterschiedlicher Dicke aufweist, als ein Spatial-Light-Modulator für die Phasen und/oder Amplitudenbeeinflussung.

5. Mikroskop nach einem der obigen Ansprüche, **dadurch gekennzeichnet, dass** die Abbildungseinrichtung eine einstellbare Fokussieroptik (20) aufweist, die der Detektionseinrichtung (60) vorgeordnet ist und eine Größe einer Verteilung des Probenlichtes (53) in der Detektionsebene anpasst.

6. Verfahren zur hochauflösenden Scanning-Mikroskopie einer Probe, wobei
- die Probe mit Beleuchtungslicht (45) beleuchtet wird, das über einen Hauptfarbteiler (49), einen Scanner (48) und ein Objektiv zur Probe geführt wird
- ein Punkt- oder Linien-Spot (S) auf der Probe in ein beugungsbegrenztes, ruhendes Einzelbild unter einem Abbildungsmaßstab in eine Detektionsebene abgebildet wird, wobei Probenlicht (53) über das Objektiv, den Scanner (48) und den Hauptfarbteiler (49) geführt wird,
- das Einzelbildes in der Detektionsebene für verschiedene Scanpositionen des Scanners (48) mit einer Ortauflösung erfasst wird, welche unter Berücksichtigung des Abbildungsmaßstabes in mindestens einer Ausdehnung/Dimension mindestens doppelt so groß ist wie eine Halbwertsbreite des beugungsbegrenzten Einzelbildes,
- die Beugungsstruktur des Einzelbildes für die Scanpositionen ausgewertet und ein Bildes der Probe erzeugt wird, das eine Auflösung aufweist, die über die Beugungsgrenze gesteigert ist,
**dadurch gekennzeichnet, dass**
- das Beleuchtungslicht durch eine Phasenmaske (48.1, 49.1) mit lateral variierendem Verlauf der Phasenbeeinflussung geführt wird, die vom gesamten Beleuchtungslicht durchstrahlt wird und in oder nahe der Objektivpupille oder einer dazu konjugierten Ebene angeordnet ist, und in der Probe ein vom Punkt- oder Linien-Spot (S) verschiedenes Beleuchtungsmuster erzeugt wird, das mit dem Punkt- oder Linien-Spot (S) so überlappt, dass die Struktur des Beleuchtungsmusters innerhalb des von der Detektionseinrichtung (60) erfassten Bereiches liegt, wobei
- die Phasenmaske (48.1) entweder nur auf das Beleuchtungslicht (45) wirkt, oder
- die Phasenmaske (49.1) auf das Beleuchtungslicht (45) und das Probenlicht (53) wirkt, und eine Maske (48.1) mit zur Phasenmaske (49.1) inverser Phasenstruktur vorgesehen wird, die nur auf das Probenlicht (53) wirkt und die Wirkung der Phasenmaske (49.1) aufhebt,
wobei das Beleuchtungsmuster durch mehrere räumlich getrennte, nebeneinanderliegende Beleuchtungsspots (S1, S2) oder eine Beleuchtungslichtverteilung in Form eines Donut-Rings gebildet wird.

## Claims

1. Microscope for super-resolution scanning microscopy of a specimen, comprising
- an illumination device for illuminating the specimen, comprising an illumination beam path which guides illumination light (45) via a principal colour splitter (49), a scanner (48) and an objective to the specimen,
- an imaging device for imaging a point spot or line spot (S) on the specimen into a diffraction-limited individual image at rest under an imaging scale into a detection plane, wherein the imaging device has an imaging beam path which images specimen light (53) via the objective, the scanner (48) and the principal colour splitter (49) into the detection plane,
- a detection device (60) for capturing the individual image in the detection plane for different scanning positions of the scanner (48) with a spatial resolution which, taking account of the imaging scale in at least one extent/dimension, is at least twice as large as a full width at half maximum of the diffraction-limited individual image,
- an evaluation device for evaluating a diffraction structure of the individual image for the scanning positions from the data of the detection device (60), and for generating an image of the specimen with a resolution increased beyond the diffraction limit, **characterized in that**
- a phase mask (48.1, 49.1) with a laterally varying profile of influencing the phase is arranged in the illumination beam path, is passed through by all of the illumination light, is arranged in or in the vicinity of the objective pupil or a plane conjugate thereto and is designed to generate an illumination pattern in the specimen that differs from the point spot or line spot (S), the different illumination pattern overlapping with the point spot or line spot (S) such that the structure of the illumination pattern is located within the region captured by the detection device (60), wherein
- either the phase mask (48.1) only acts on the illumination light (45) or
- the phase mask (49.1) acts on the illumination light (45) and the specimen light (53), and a mask (48.1) with a phase structure inverted to that of the phase mask (49.1) is provided and only acts on the specimen light (53) and cancels the effect of the phase mask (49.1),
wherein the illumination pattern is formed by a plurality of spatially separated illumination spots (S1, S2) lying next to one another or by an illumination light distribution in the form of a donut ring.

2. Microscope according to Claim 1, **characterized in that** the phase mask (49.1) also acts as the principal colour splitter and comprises a dichroic layer system (49.2) which reflects illumination light (45) and which serves to separate specimen light (53) and illumination light (45), wherein the form of the phase mask (49.1) is designed such that it does not bring about phase differences in transmission and hence does not bring about phase differences for the specimen light (53).

3. Microscope according to Claim 2, **characterized in that** the phase mask (49.1) designed as the principal colour splitter is attached to a colour splitter wheel (49), the latter carrying a plurality of phase masks which differ in terms of the way they influence the phase.

4. Microscope according to any one of the preceding claims, **characterized in that** the phase mask is designed in accordance with one of the following forms: as a half pupil phase mask with a phase profile that varies on each of the two sides, with the profile on the two sides preferably being inverted in relation to one another, as a phase mask with a phase jump, as a spiral phase mask, as a glass panel with a different thickness along its cross section for influencing the phase, as a phase mask with an edge for separating regions of different thickness, as a spatial light modulator for influencing the phase and/or amplitude.

5. Microscope according to any one of the preceding claims, **characterized in that** the imaging device comprises an adjustable focussing optical unit (20), which is disposed upstream of the detection device (60) and which adjusts the size of the distribution of the specimen light (53) in the detection plane.

6. Method for super-resolution scanning microscopy of a specimen, wherein
- the specimen is illuminated with illumination light (45) which is fed to the specimen via a principal colour splitter (49), a scanner (48) and an objective,
- a point spot or line spot (S) on the specimen is imaged into a diffraction-limited individual image at rest under an imaging scale into a detection plane, wherein specimen light (53) is guided via the objective, the scanner (48) and the principal colour splitter (49),
- the individual image in the detection plane is captured for different scanning positions of the scanner (48) with a spatial resolution which, taking account of the imaging scale in at least one extent/dimension, is at least twice as large as a full width at half maximum of the diffraction-limited individual image,
- the diffraction structure of the individual image is evaluated for the scanning positions and an image of the specimen is generated with a resolution increased beyond the diffraction limit,
**characterized in that**
- the illumination light is guided through a phase mask (48.1, 49.1) with a laterally varying profile of influencing the phase, said phase mask being passed through by all of the illumination light and being arranged in or in the vicinity of the objective pupil or a plane conjugate thereto, and an illumination pattern which differs from the point spot or line spot (S) is generated in the specimen and overlaps with the point spot or line spot (S) such that the structure of the illumination pattern is located within the region captured by the detection device (60), wherein
- either the phase mask (48.1) only acts on the illumination light (45) or
- the phase mask (49.1) acts on the illumination light (45) and the specimen light (53), and a mask (48.1) with a phase structure inverted to that of the phase mask (49.1) is provided and only acts on the specimen light (53) and cancels the effect of the phase mask (49.1),
wherein the illumination pattern is formed by a plurality of spatially separated illumination spots (S1, S2) lying next to one another or by an illumination light distribution in the form of a donut ring.

## Revendications

1. Microscope destiné à la microscopie à balayage haute résolution d'un échantillon, comprenant
- un dispositif d'éclairage permettant d'éclairer l'échantillon et présentant une trajectoire de faisceau d'éclairage qui guide la lumière d'éclairage (45) par un séparateur de couleurs principal (49), un scanner (48) et un objectif jusqu'à l'échantillon,
- un dispositif de reproduction permettant de reproduire un spot ponctuel ou linéaire (S) sur l'échantillon dans une image individuelle fixe, limitée par diffraction, selon une échelle de reproduction dans un plan de détection, le dispositif de reproduction présentant une trajectoire de faisceau de reproduction qui reproduit la lumière d'échantillon (53) par l'objectif, le scanner (48) et le séparateur de couleurs principal (49) dans le plan de détection,
- un dispositif de détection (60) permettant de détecter l'image individuelle dans le plan de détection pour différentes positions de balayage du scanner (48) avec une résolution locale qui, en tenant compte de l'échelle de reproduction dans au moins une extension/dimension, est au moins deux fois plus grande qu'une largeur de valeur moyenne de l'image individuelle limitée par diffraction,
- un dispositif d'évaluation permettant d'évaluer une structure de diffraction de l'image individuelle pour les positions de balayage à partir de données du dispositif de détection (60) et de produire une image de l'échantillon qui présente une résolution qui est augmentée au-delà de la limite de diffraction,
**caractérisé en ce que**
- sur la trajectoire de faisceau d'éclairage, un masque de phase (48.1, 49.1) ayant un tracé de la perturbation de phase variant latéralement est disposé, qui est traversé par toute la lumière d'éclairage dans ou près de la pupille d'objectif ou un plan conjugué avec celle-ci, et est réalisé pour produire dans l'échantillon un motif d'éclairage différent du spot ponctuel ou linéaire (S) qui se chevauche avec le spot ponctuel ou linéaire (S) de telle sorte que la structure du motif d'éclairage se trouve à l'intérieur de la zone détectée par le dispositif de détection (60), dans lequel
- soit le masque de phase (48.1) agit uniquement sur la lumière d'éclairage (45),
- soit le masque de phase (49.1) agit sur la lumière d'éclairage (45) et la lumière d'échantillon (53), et un masque (48.1) ayant une structure de phase inversée par rapport au masque de phase (49.1) est prévu qui n'agit que sur la lumière d'éclairage (53) et annule l'effet du masque de phase (49.1),
le motif d'éclairage étant formé par plusieurs spots d'éclairage adjacents (S1, S2) séparés dans l'espace, ou une distribution de lumière d'éclairage sous la forme d'un beignet rond.

2. Microscope selon la revendication 1, **caractérisé en ce que** le masque de phase (49.1) sert aussi de séparateur de couleurs principal et présente un système à couches dichroïques (49.2) réfléchissant la lumière d'éclairage (45) afin de séparer la lumière d'échantillon (53) et la lumière d'éclairage (45), le masque de phase (49.1) étant configuré au niveau de sa forme de telle sorte qu'il ne provoque aucune différence de phase en transmission et donc pour la lumière d'échantillon (53).

3. Microscope selon la revendication 2, **caractérisé en ce que** le masque de phase (49.1) réalisé comme séparateur de couleurs principal est appliqué à une roue de séparateur de couleurs (49) qui porte plusieurs masques de phase qui se distinguent quant à leur perturbation de phase.

4. Microscope selon l'une quelconque des revendications précédentes, **caractérisé en ce que** le masque de phase est réalisé selon l'une des formes suivantes : comme masque de phase demi-pupille avec un tracé de phase variant respectivement des deux côtés, les tracés des deux côtés étant de préférence mutuellement inversés, comme masque de phase à saut de phase, comme masque de phase en spirale, comme plaque de verre d'épaisseur variable le long de sa section transversale pour perturber la phase, comme masque de phase ayant une arête pour séparer des zones d'épaisseur différente, comme modulateur spatial de lumière pour la perturbation de phase et/ou d'amplitude.

5. Microscope selon l'une quelconque des revendications précédentes, **caractérisé en ce que** le dispositif de reproduction présente une optique de focalisation réglable (20) qui est placée en amont du dispositif de détection (60) et adapte une grandeur d'une distribution de la lumière d'échantillon (53) dans le plan de détection.

6. Procédé de microscopie à balayage haute résolution d'un échantillon, dans lequel
- l'échantillon est éclairé par une lumière d'éclairage (45) qui est guidée par un séparateur de couleurs principal (49), un scanner (48) et un objectif jusqu'à l'échantillon,
- un spot ponctuel ou linéaire (S) est reproduit sur l'échantillon dans une image individuelle fixe, limitée par diffraction, selon une échelle de reproduction dans un plan de détection, la lumière d'échantillon (53) étant guidée par l'objectif, le scanner (48) et le séparateur de couleurs principal (49),
- l'image individuelle est détectée dans le plan de détection pour différentes positions de balayage du scanner (48) avec une résolution locale qui, en tenant compte de l'échelle de reproduction dans au moins une extension/dimension, est au moins deux fois plus grande qu'une largeur de valeur moyenne de l'image individuelle limitée par diffraction,
- la structure de diffraction de l'image individuelle est évaluée pour les positions de balayage, et une image de l'échantillon est produite qui présente une résolution qui est augmentée au-delà de la limite de diffraction,
**caractérisé en ce que**
- la lumière d'éclairage est guidée à travers un masque de phase (48.1, 49.1) ayant un tracé de la perturbation de phase variant latéralement, qui est traversé par toute la lumière d'éclairage et est disposé dans ou près de la pupille d'objectif ou un plan conjugué avec celle-ci, et dans l'échantillon, un motif d'éclairage différent du spot ponctuel ou linéaire (S) est produit qui se chevauche avec le spot ponctuel ou linéaire (S) de telle sorte que la structure du motif d'éclairage se trouve à l'intérieur de la zone détectée par le dispositif de détection (60), dans lequel
- soit le masque de phase (48.1) agit uniquement sur la lumière d'éclairage (45),
- soit le masque de phase (49.1) agit sur la lumière d'éclairage (45) et la lumière d'échantillon (53), et un masque (48.1) ayant une structure de phase inversée par rapport au masque de phase (49.1) est prévu qui n'agit que sur la lumière d'éclairage (53) et annule l'effet du masque de phase (49.1),
le motif d'éclairage étant formé par plusieurs spots d'éclairage adjacents (S1, S2), séparés dans l'espace, ou une distribution de lumière d'éclairage sous la forme d'un beignet rond.
